# EUROPEAN PATENT SPECIFICATION

(11) **EP 4 620 814 B1**
(45) Date of publication and mention of the grant of the patent: **02.12.2026**
(21) Application number: 25154203.1
(22) Date of filing: 27.01.2025
(51) Int. Cl.: B64D 11/00, B64D 11/04, B64D 13/06, B64D 13/08

(54) **CART COMPARTMENT COOLING USING AIRCRAFT POTABLE WATER AND METHOD**
WAGENFACHKÜHLUNG MIT VERWENDUNG VON TRINKWASSER IN EINEM FLUGZEUG UND VERFAHREN
REFROIDISSEMENT DE COMPARTIMENT DE CHARIOT À L'AIDE D'EAU POTABLE D'AÉRONEF ET PROCÉDÉ

(30) Priority: 18.03.2024 US 202418608186
(43) Date of publication of application: 24.09.2025
(73) Proprietor: The Boeing Company, Arlington, VA 22202 (US)
(72) Inventor: PUCKER, Andrew L, ARLINGTON, 22202 (US); MOVSESIAN, Sami, ARLINGTON, 22202 (US); MORAN, Thomas Joseph, ARLINGTON, 22202 (US)
(74) Representative: Plasseraud IP

(56) References cited:
- WO-A2-2008/008324
- US-A1- 2005 210 910
- US-B2- 10 488 075

## Description

### TECHNOLOGICAL FIELD

The present disclosure relates, generally, to the field of refrigeration on aircraft. More specifically, the present disclosure relates to the field of cooling and/or chilling galley carts on passenger aircraft.

### BACKGROUND

Air chillers are typically added into passenger aircraft architecture to maintain a cooled or chilled temperature of food cart contents. Such aircraft architecture has typically required the installation of air duct components and air chiller components into existing aircraft architecture. Such added components consequently add weight, increase noise, increase power consumption, and add system complexity to aircraft. The addition of weight to aircraft can commensurately increase fuel consumption, decrease aircraft range, potentially decrease passenger capacity count, and otherwise increase aircraft operation cost.
US2005/210910A1 states, in its abstract, an "improved cooling system for a commercial aircraft galley, heat is transferred from a galley food cart by a point-of-use heat exchange system to a liquid cooled condenser. Liquid coolant for the liquid cooled condenser is circulated in a liquid coolant loop to a heat exchanger expelling heat for cooling the liquid coolant. The liquid coolant may be water or a mixture of water and glycol. A flow of cooling air from a heat exchanger cooled by the liquid cooled condenser is cycled through an air over system, through an air through system, or from a thermal convection air cooling system providing at least one cooled galley food cart surface to provide cooling. Heat may be transferred from a plurality of galley food carts to the circulating liquid coolant".
WO2008/008324A2, states in its abstract "systems and methods for transporting heat away from galley refrigeration equipment or other heat-generating systems such as avionics, power electronics, or in-flight entertainment units, via a potable water system. The potable water system transports heat more effectively and more efficiently than others stems used to date."
US 10 488 075 B2, states, in its abstract, "An apparatus for pre-heating potable water in aircraft with waste heat includes an air to water heat exchanger having a heat exchanger housing with an inlet end that receives heat from one or more of a galley insert exhaust air inlet, a galley appliance exhaust air inlet and an air chiller exhaust air inlet. A potable water supply inlet supplies potable water to the air to water heat exchanger, which transfers heat to the potable water, and a potable water supply outlet supplies heated potable water, such as to a galley insert or galley appliance, for example. An exhaust air outlet vents cooled exhaust air from the air to water heat exchanger."

Unless explicitly identified as such, no statement herein is admitted as prior art merely by its inclusion in the Technological Field and/or Background section.

### SUMMARY OF THE CLAIMED INVENTION

A system for cooling an aircraft galley cart compartment is provided according to any of claims 1-9. An aircraft with such a system is provided according to claim 10. A method for cooling an aircraft galley cart compartment is provided according to any of claims 11-15.

### SUMMARY OF THE DISCLOSURE

For illustrative purposes, a present aspect is directed to a system for cooling an aircraft galley cart compartment, with the system including a potable water flow from an aircraft potable water supply configured to circulate in a cool potable water circuit. The system further includes a potable water circuit in communication with the aircraft potable water supply, and an aircraft galley cart compartment configured to be at least indirectly cooled by a potable water flow circulated through the potable water circuit configured to contact, otherwise communicate with, and produce a chilled air circuit that directly contacts, chills, and maintains a chilled temperature within an aircraft galley cart compartment.

According to an illustrative example, useful for understanding the claimed subject-matter which determines the scope of protection, another present aspect is directed to a system for cooling an aircraft galley cart compartment, with the system including a cool potable water flow, with the cool potable water flow configured to initiate from an aircraft potable water supply, and a potable water circuit in communication with the aircraft potable water supply. The system further includes an aircraft galley cart compartment configured to be cooled by a potable water flow circulated through the potable water circuit by direct air cooling, with the system further including a chilled air circuit in communication with the aircraft galley cart compartment. The chilled air circuit further includes an air chiller unit, with the air chiller unit including an air chiller air return, an integrated heat exchanger, with the integrated heat exchanger positioned within the air chiller unit in close proximity to the air chiller air return, and with the integrated heat exchanger in communication with the potable water circuit configured to contribute cooling to the chilled air circuit.

In another present aspect, in operation, the potable water circuit is a closed potable water circuit, with the potable water closed circuit further comprising a valve, with the valve positioned between the aircraft potable water supply and the potable water circuit, and wherein said valve is configured to move from an open position to a closed position to maintain a closed initial potable water charge within the closed potable water circuit.

In another present aspect, in operation, the potable water circuit is an open potable water circuit in communication with a continuous potable water flow directed from the aircraft potable water supply into the potable water circuit, with the continuous potable water flow further directed from the potable water circuit back into the aircraft potable water supply.

In another present aspect, the potable water circuit is in communication with the chilled air circuit, said potable water circuit configured to augment cooling air in the chilled air circuit, said chilled air circuit in direct contact with the aircraft galley cart compartment.

In another present aspect, an aircraft galley compartment is in communication with and otherwise comprises the systems set forth herein.

Illustrative aspects not necessarily forming part of the claims are given hereafter. Another present illustrative aspect is directed to an aircraft including a system for cooling an aircraft galley cart compartment, with the system including a cool potable water flow, with the cool potable water flow configured to initiate from an aircraft potable water supply, and a potable water circuit in communication with the aircraft potable water supply. The system further includes an aircraft galley cart compartment configured to be indirectly cooled by a potable water flow circulated through the potable water circuit, with the system further including a chilled air circuit in communication with the aircraft galley cart compartment and with the chilled air circuit further in communication with the potable water circuit. The chilled air circuit further includes an air chiller unit, with the air chiller unit including an air chiller air return, an integrated heat exchanger, with the integrated heat exchanger positioned within the air chiller unit in close proximity to the air chiller air return, and with the integrated heat exchanger in communication with the potable water circuit.

Another present illustrative aspect is directed to an air chiller unit, with the air chiller unit including an air chiller air return, and an integrated heat exchanger, with the integrated heat exchanger positioned within the air chiller unit and further positioned in close proximity to the air chiller air return, with the integrated heat exchanger in communication with a potable water circuit. The integrated heat exchanger includes an integrated heat exchanger water circuit inlet configured to introduce a cool water flow from the potable water circuit, with the integrated heat exchanger water circuit outlet configured to expel a warm water flow to the potable water circuit.

In another present illustrative aspect, in operation, the potable water circuit is a closed potable water circuit, with the potable water closed circuit further comprising a valve, with the valve positioned between the aircraft potable water supply and the potable water circuit, and wherein said valve is configured to move from an open position to a closed position to maintain a closed initial potable water charge within the closed potable water circuit.

In another present illustrative aspect, in operation, the potable water circuit is an open potable water circuit in communication with a continuous potable water flow directed from the aircraft potable water supply into the potable water circuit, with the continuous potable water flow further directed from the potable water circuit back into the aircraft potable water supply.

In another present illustrative aspect, the potable water circuit is in communication with the chilled air circuit, said potable water circuit configured to increase cooling efficiency of the air chiller unit, wherein the chilled air circuit is placed into direct contact with an aircraft galley cart compartment.

Another present illustrative aspect is directed to an aircraft including an air chiller unit, with the air chiller unit including an air chiller air return, and an integrated heat exchanger, with the integrated heat exchanger positioned within the air chiller unit and further positioned in close proximity to the air chiller air return, with the integrated heat exchanger in communication with a potable water circuit. The integrated heat exchanger includes an integrated heat exchanger water circuit inlet configured to introduce a cool water flow from the potable water circuit, with the integrated heat exchanger water circuit outlet configured to expel a warm water flow to the potable water circuit.

A further present illustrative aspect is directed to a galley cart compartment of an aircraft, with the galley cart including an air chiller unit, with the air chiller unit including an air chiller air return, and an integrated heat exchanger, with the integrated heat exchanger positioned within the air chiller unit and further positioned in close proximity to the air chiller air return, with the integrated heat exchanger in communication with a potable water circuit. The integrated heat exchanger includes an integrated heat exchanger water circuit inlet configured to introduce a cool water flow from the potable water circuit, with the integrated heat exchanger water circuit outlet configured to expel a warm water flow to the potable water circuit.

Another present illustrative aspect is directed to a method for cooling an aircraft galley compartment, with the method including directing a potable water flow of potable water from an aircraft potable water supply within a potable water circuit in an aircraft, said potable water circuit comprising the potable water flow of potable water at a potable water temperature that is below an aircraft cabin ambient temperature, and positioning the potable water circuit in communication with a chilled air circuit, with the chilled air circuit in communication with an aircraft galley compartment, and with the chilled air circuit configured to cool an aircraft galley cart compartment at least one of directly and indirectly. The method further includes the chilled air circuit including an air chiller unit, with the air chiller unit including an air chiller air return and an integrated heat exchanger incorporated within the air chiller unit,. And with the method further including positioning the integrated heat exchanger within the air chiller unit housing of the air chiller unit, with the heat exchanger positioned in close proximity to the air chiller air return within the air chiller unit housing, and with integrated heat exchanger in communication with the potable water circuit, directing chilled air from the chilled air circuit to the aircraft galley compartment, directing warmer air from the aircraft galley compartment to the chilled air circuit, and maintaining the aircraft galley compartment temperature at a temperature ranging from about 0°C to about 7°C (about 32°F to about 45°F).

In another present illustrative aspect, in method the potable water circuit consists of a closed potable water circuit.

In a further present illustrative aspect, in method the potable water circuit consists of an open potable water circuit, with the open potable water circuit configured to remain in open communication with the aircraft potable water supply, and with the aircraft potable water supply comprising a potable water supply inlet in communication with the open potable water circuit.

In a further present illustrative aspect, according to methods the potable water flow of potable water in the potable water circuit is configured to maintain an average temperature ranging from about 0°C to about 25°C (about 35°F to about 77°F).

Another present illustrative aspect is directed to a system for augmenting the chilling capacity of an air chiller, with the system configured to operate according to a method for cooling an aircraft galley compartment, with the method including directing a potable water flow of potable water from an aircraft potable water supply within a potable water circuit in an aircraft, said potable water circuit comprising the potable water flow of potable water at a potable water temperature that is below an aircraft cabin ambient temperature, and positioning the potable water circuit in communication with a chilled air circuit, with the chilled air circuit in communication with an aircraft galley compartment, and with the chilled air circuit configured to cool an aircraft galley cart compartment at least one of directly and indirectly. The method further includes the chilled air circuit including an air chiller unit, with the air chiller unit including an air chiller air return and an integrated heat exchanger incorporated within the air chiller unit,. And with the method further including positioning the integrated heat exchanger within the air chiller unit housing of the air chiller unit, with the heat exchanger positioned in close proximity to the air chiller air return within the air chiller unit housing, and with integrated heat exchanger in communication with the potable water circuit, directing chilled air from the chilled air circuit to the aircraft galley compartment, directing warmer air from the aircraft galley compartment to the chilled air circuit, and maintaining the aircraft galley compartment, that can be an aircraft galley cart compartment, at a temperature ranging from about 0°C to about 7°C (about 32°F to about 45°F).

In another present illustrative aspect, the system for augmenting the chilling capacity of an air chiller is configured to operate according to the method for cooling an aircraft galley compartment is a closed system.

In another present illustrative aspect, the system for augmenting the chilling capacity of an air chiller configured to operate according to the method for cooling an aircraft galley compartment is an open system.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Having thus described variations of the disclosure in general terms, reference will now be made to the accompanying drawings, which are not necessarily drawn to scale, and wherein:
FIG. 1 is an illustration of a vehicle in the form of an aircraft, according to present aspects;
FIG. 2 is an overhead plan view of an aircraft cabin present in an aircraft of the type shown in FIG. 1, according to present aspects;
FIG. 3 is a box diagram of a potable water circuit, according to present aspects;
FIG. 4 is a box diagram of a closed potable water circuit, according to present aspects;
FIG. 5 is a box diagram of an open potable water circuit, according to present aspects;
FIG. 6 is a box diagram of a closed potable water circuit, according to present aspects;
FIG. 7 is a box diagram of an open potable water circuit, according to present aspects;
FIG. 8 is a box diagram of an open potable water circuit, according to present aspects;
FIG. 9 is perspective view of a heat exchanger, according to present aspects;
FIG. 10 is a flowchart outlining a method, according to present aspects;
FIG. 11 is a flowchart outlining a method, according to present aspects;
FIG. 12 is a flowchart outlining a method, according to present aspects;
FIG. 13 is a flowchart outlining a method, according to present aspects.
FIG. 14 is a box diagram of a closed potable water circuit, according to present aspects;
FIG. 15 is a box diagram of an open potable water circuit, according to present aspects;
FIG. 16 is a box diagram of an air chiller unit; according to present aspects;
FIG. 17 is a flowchart outlining a method, according to present aspects; and
FIG. 18 is a flowchart outlining a method, according to present aspects.

### DETAILED DESCRIPTION

Passenger aircraft typically use potable water directed from a potable water supply for multiple passenger and crew uses including, for example, lavatory needs (that can include toilet operation, hand washing, etc.), crew needs, for example, in a galley location, and other uses. Potable water is typically maintained within one or more potable water tanks typically stored in a cargo or equipment bay located beneath a passenger cabin floor, with the potable water tanks typically residing in an area of the aircraft that is typically subjected to cold temperatures when an aircraft is in a flight phase and flying at altitudes with cold temperatures located outside the aircraft.

Potable water tanks on aircraft (referred to equivalently herein as "an aircraft potable water supply") can include an intake and discharge port that can be the same port capable of providing intake function for filling the potable water tank(s), and a discharge function for depleting/draining the potable water tank(s). A potable water tank can be charged/filled when the aircraft is on the ground from a ground potable water supply that can be a direct ground water supply from a ground-based tank that is pumped into the aircraft potable water tank(s). In addition, a ground potable water tanker-type vehicle can transfer potable water, for example, from a ground water tank, into the aircraft potable water tank(s). In both instances, the potable water that is transferred into aircraft potable water tank(s) is typically delivered at a below-ambient temperature such that the potable water is in a "cooled temperature" ranging from about 2°C to about 25°C (about 35°F to about 77°F).

Potable water temperature can increase in within the aircraft potable water tank(s) when an aircraft is on the ground (e.g., if the ambient outdoor temperature is warm with temperatures ranging from about 27°C (80°F) or more). However, once an aircraft is airborne and reaches an altitude, for example, in excess of about 3.000 m (10,000 feet), the ambient temperature outside of the aircraft during flight can reach cold ambient outdoor temperatures ranging from about minus 29°C to about minus 18°C (about minus 20°F to about 0°F). In addition, potable water typically enters an aircraft (e.g., is delivered from an exterior potable water source into an aircraft, etc.) at below ambient temperatures and, due to the location of potable water tanks on aircraft "below-deck" (e.g., in aircraft equipment and cargo bays that are not typically heated, etc.), an aircraft potable water supply in aircraft potable water tank(s) is typically directed from an aircraft potable water supply, in flight, to aircraft cabins at "cool" temperatures ranging from about 4°C to about 10°C (about 40°F to 50°F).

In another example, an aircraft potable water supply in the form of a "tank" can be located in other aircraft locations also typically not heated including, for example, in an aircraft crown (e.g., located above an aircraft passenger cabin ceiling, etc.). In another example, an aircraft can comprise multiple potable water tanks located at the same or differing aircraft locations or regions (e.g., one or more potable water tanks located "below-deck" as well as one or more tanks located in the aircraft crown, etc.).

According to present aspects, potable water sources on an aircraft represent a source of cool material flow that presents a thermal delta between the potable water flow from a potable water source and points along a potable water flow circuit directed from a potable water supply in a in a potable water circuit. According to further present aspects, a potable water flow in an aircraft is configured to absorb heat during a thermal exchange occurring between a potable water flow "cooler" temperature and a higher ambient temperature that can be, for example, located at monuments within an aircraft passenger cabin.

Present aspects are directed to the efficient redirection, re-purposing, modification, and augmentation of a potable water flow of potable water from potable water systems already present in an aircraft into a new potable water circuit for the purpose of maintaining a below-ambient temperature of food cart/galley cart contents (e.g., at a galley cart compartment temperature ranging from about 0°C to about 7°C (about 32°F to about 45°F). According to present aspects, the advantageous use of the thermal delta of the cool aircraft potable water supply, at least during flight, and cool potable water flow relative to and compared to warmer aircraft environments, that can include a galley cart compartment, can significantly decrease existing aircraft cooling system complexity, including, for example, decreasing aircraft power consumption, obviating or reducing the size of chillers, cooling units, chilling solutions (e.g., dry ice, ice, etc.), reducing the footprint, size characteristics, and power consumption demands of such cooling units, etc. The reduction and/or elimination of cooling equipment and power consumption demands, etc., can result in a significant reduction in the overall weight of an aircraft, resulting in significant decreases operating cost, and a significant increase in efficiency that can result in the increase in sustainability and decrease in an environmental footprint of an aircraft.

In addition, present aspects obviate the need to install and power separate equipment, components, and systems onto aircraft that perform the dedicated and primary function of refrigerating food cart contents in an aircraft, for example. In addition, present aspects employ a safe, modified cooling system that will also cool and/or chill aircraft food cart/galley cart contents, etc., and that will operate by directing already cool potable water to produce enhanced cooling of aircraft food cart/galley cart contents, etc., with present systems obviating the installation of separate dedicated cooling systems that can employ ammonia or other potentially toxic compounds.

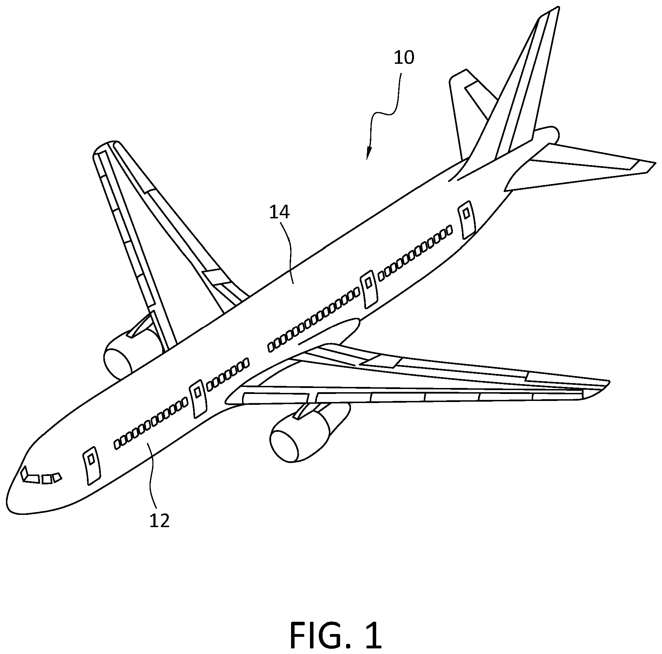

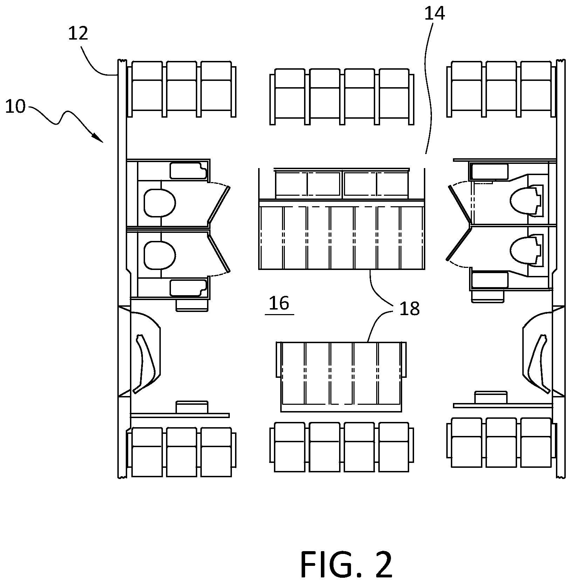

FIG. 1 is a perspective view of a vehicle in the form of an aircraft 10 including a fuselage 12, and containing and otherwise including an aircraft cabin 14 within fuselage 12. FIG. 2 is an overhead plan view of the aircraft cabin 14 within an aircraft of the type shown in FIG. 1 as aircraft 10. FIG. 2 is an overhead view of an aircraft cabin 14 that can be of the type located within aircraft 10. As shown in FIG. 2, a galley region 16 can include a plurality of galley carts 18 located within galley region 16. While present aspects are directed to the enhanced direct or indirect cooling of galley cart compartments on aircraft through the direction of a cool, cold potable water circuit to a galley cart compartment, present aspects also contemplate the use of a cool potable water circuit to enhance cooling of areas that can require refrigeration, including galley areas that can, for example, house galley carts, as well as stationary refrigeration areas and compartments.

According to present aspects, a potable water circuit is established and configured within an aircraft, with the potable water circuit in communication with a cool aircraft potable water supply and/or further in communication with existing potable water circuits in aircraft. In one present aspect, a system for cooling an aircraft galley cart compartment includes directing a potable water flow within a potable water circuit in communication with a cool potable water supply. The potable water circuit is configured to transfer the cooling capability of the cool potable water flow directly, or indirectly, to a galley cart compartment. As defined herein, a "cool" aircraft potable water supply and a "cool" potable water flow refers to a temperature of the aircraft water supply and the potable water flow being at least cooler than an ambient temperature of an aircraft cabin when the aircraft is on the ground in a hot environment, and significantly cooler than an aircraft cabin ambient temperature when the aircraft is in flight and at a sustained altitude of greater than about 3.000 m (or 10,000 feet), for example.

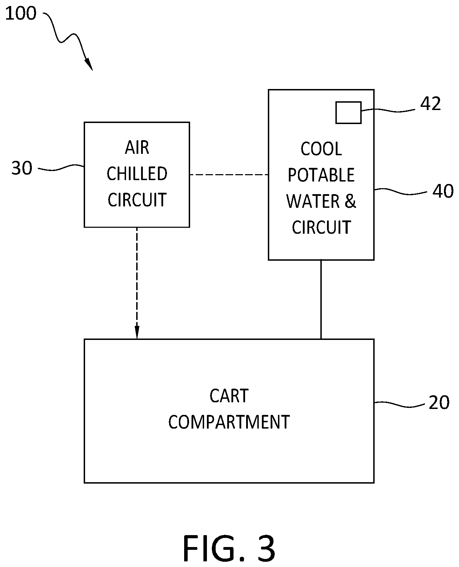

FIG. 3 is a general system diagram, according to present aspects, showing a system 100, including a potable water circuit 40 (referred to equivalently herein as "cool potable water circuit 40" and/or "water circuit 40") in communication with an aircraft potable water supply 42 (that can be a cool potable water reservoir, a cool potable water tank, etc.). As shown in FIG. 3, the cool potable water circuit is in communication directly or indirectly with the galley cart compartment 20. FIG 3 further shows potable water circuit 40 in communication with a chilled air circuit 30 ("referred to equivalently herein as "air circuit 30") that is further in communication with the galley cart compartment 20.

According to present aspects, for illustrative purposes, the cooling transfer can be transferred indirectly to the galley cart compartment with the cool potable water flow interacting with an airflow to chill or to further chill air in the airflow that is then directed to the aircraft galley cart compartment. In this aspect, the cooling effect of the potable water flow in the potable water circuit can interface with an airflow at, and via, a heat exchanger to cool or chill the airflow that is then directed from the heat exchanger to the galley cart compartment. According to present aspects, the airflow chilled by the potable water flow within the potable water circuit can further be in communication with an auxiliary air cooler or air chiller, with the size and/or footprint of the auxiliary air chiller able to be significantly reduced compared with air chillers that were previously used.

In another example, and according to present aspects, a galley cart compartment can be cooled by both: 1) directing a cool potable water flow through a potable water circuit that directly contacts a galley cart compartment, with a thermal delta between the cooler potable water flow temperature as compared to a warmer temperature within a galley cart compartment; and 2) also directing a chilled airflow from a heat exchanger to the galley cart compartment; with the cool potable water flow in the potable water circuit directed to the heat exchanger to chill or further chill an airflow at the heat exchanger.

In another example, and according to present aspects, the cooling effect from a cool potable water circuit is directed to cool an aircraft galley cart compartment exclusively. That is, according to a present aspect, a cool potable water circuit is solely responsible for cooling a galley cart compartment with no cooling contribution from a co-directed cooling airflow.

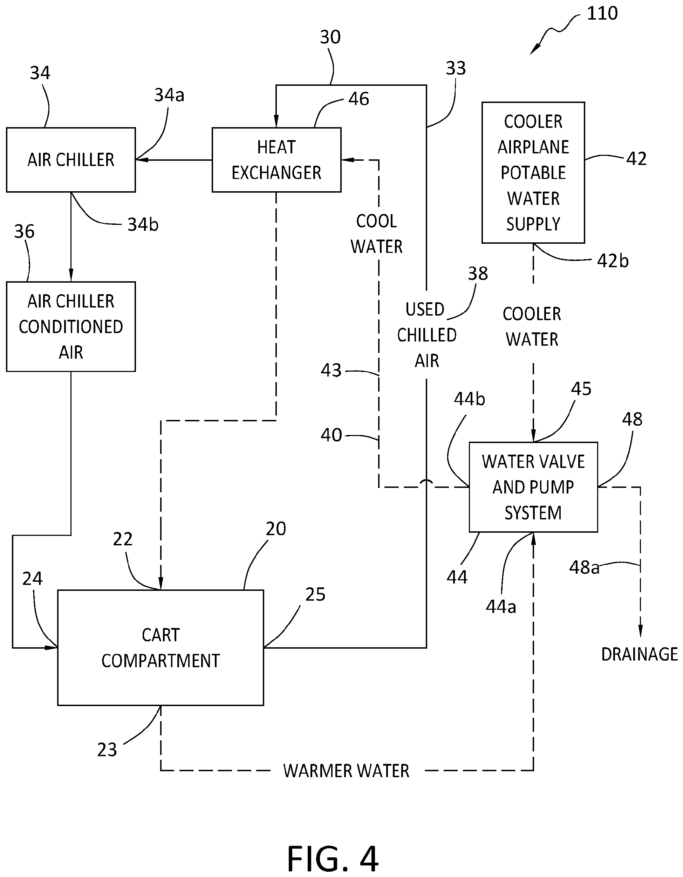

FIG. 4, 5, 6, 7, and 8 are circuit illustrations outlining, more specifically, present aspects. FIGs. 4, 5, and 8, illustrate present aspects where both a chilled air circuit and a cool potable water circuit are present and can work together to cool a galley cart compartment. According to present aspects, the presence of the cool potable water circuit enables the use of smaller components in the chilled air circuit, or the ability to completely obviate the presence of certain dedicated air-chilling components in the air circuit that were previously used to deliver cool air to the galley cart compartment. Present aspects also result in the production of significantly less noise from the air cooling system as well as a significant reduction in the power drain (referred to equivalently herein as "power consumption" and "power demand") previously realized by typical air cooling systems. According to present aspects, as shown in FIGs. 4, 5, and 8, the cool potable water circuit is at least partially responsible for also cooling the airflow that in turn cools the galley cart compartment.

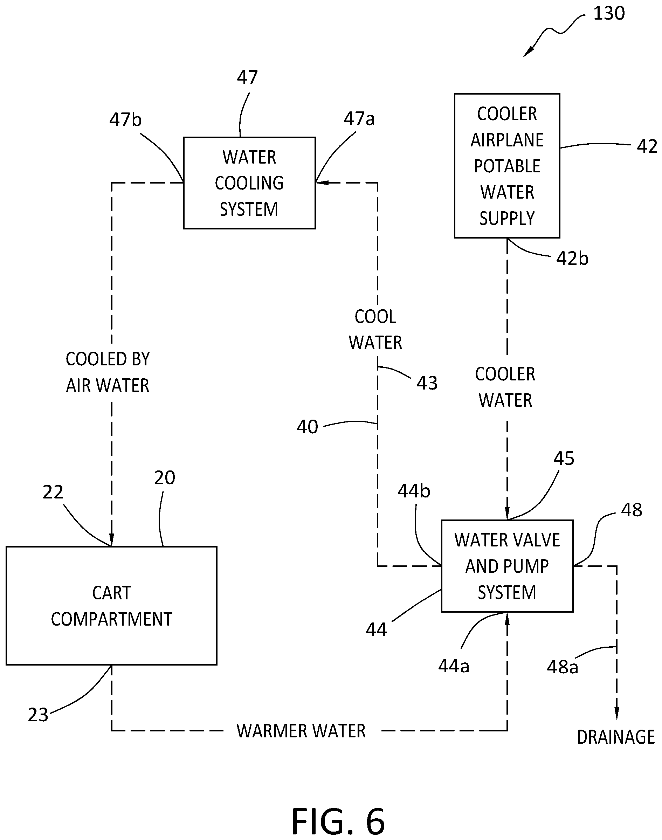

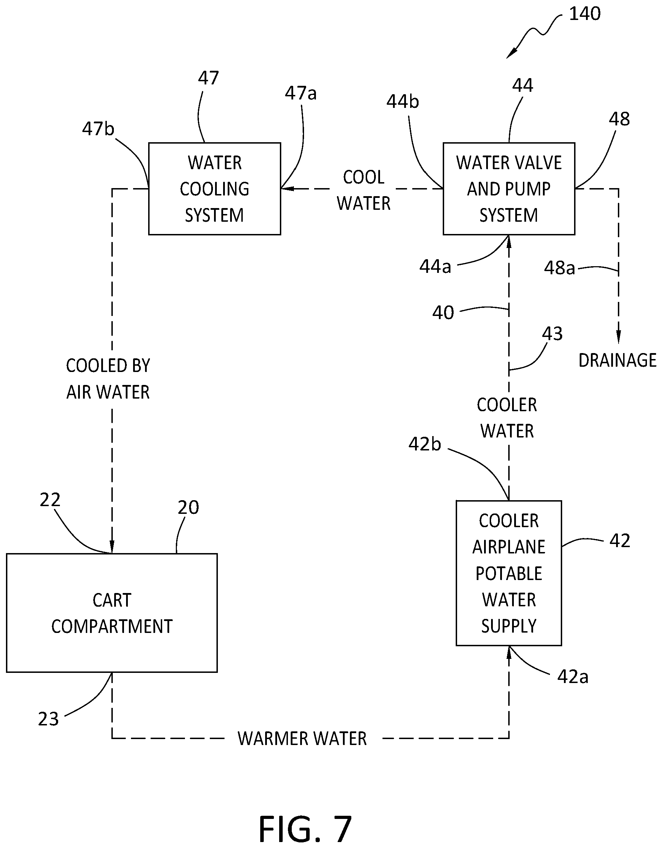

In FIGs. 6 and 7, according to present illustrative aspects, the use of the cool potable water circuit can be exclusively responsible for cooling the galley cart compartment, as the circuits presented in FIGs 6 and 7 do not include a cool air circuit. That is, as explained herein, FIGs. 6 and 7 present a system for cooling galley cart compartments that only includes the cool potable water circuit.

In addition, present aspects include a cool potable water circuit implemented to cool a galley cart compartment where the cool potable water circuit is either "closed" or "open". That is, in FIGs. 4 and 6, the cool potable water from the cool aircraft potable water supply is directed into the cool potable water circuit (that is referred to herein as being a "closed" circuit); as an initial charge of cool potable water from the aircraft potable water supply fills the cool potable water circuit, and after which a valve is engaged at the cool potable water supply outlet to cease a flow into the circuit from the cool potable water supply. In this "closed" cool potable water circuit, the cool potable water within the circuit can increase slightly in temperature during water movement through the circuit, and as the cool water engages heat sinks in the circuit, including the galley cart compartment requiring cooling from the cool potable water, a heat exchanger, etc.

As explained herein, according to present aspects, the temperature of the potable water in the circuit can be cooled environmentally by, for example, adjusting amounts and types of insulation present at the aircraft potable water supply and throughout the potable water circuit that is exposed to cold ambient temperatures outside of an aircraft during flight. In addition, according to present aspects, the temperature of the potable water in the circuit can be additionally cooled by incorporating a small water chiller in the potable water circuit to continually cool the potable water and otherwise maintain a selected cool temperature in the potable water circuit, for example, maintaining the cool potable water in the potable water circuit at a temperature ranging from about 0°C to about 7°C (about 32°F to about 45°F) during flight; with the cool potable water temperature that contacts components of the galley cart compartment maintaining a temperature ranging from about 0°C to about 7°C (about 32°F to about 45°F).

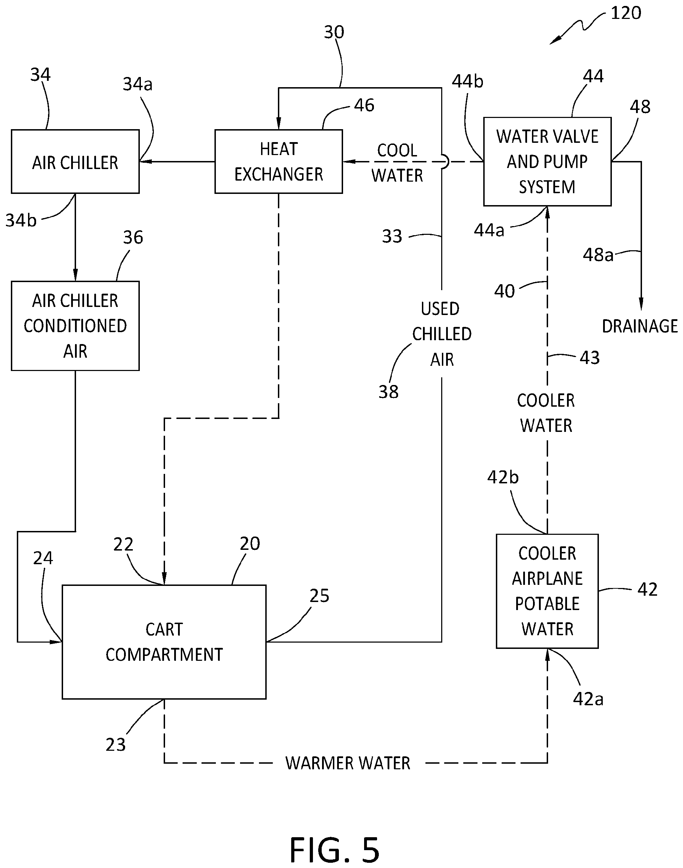

In FIGs. 5, 6, and 8, the cool potable water from the cool aircraft potable water supply is continually directed into the cool potable water circuit (that is referred to herein as an "open" circuit) as an initial charge of cool potable water fills the cool potable water circuit, after which potable water is returned to the cool potable water supply at a cool potable water circuit "return", with the cool potable water supply outlet into the circuit remaining "open" to deliver a continuous ("fresh") supply of cool potable water to the circuit from the cool aircraft potable water supply. Again, according to present aspects, potable water flowing through the potable water circuit returns into the aircraft potable water supply in the open circuit. In the "open" circuit configuration, the temperature of the cool potable water can more likely not realize a significant rise in temperature during flight as, in the open circuit configuration, a continuous fresh supply of low temperature potable water (e.g., cool or cold potable water) enters the cool potable water circuit from the cool aircraft potable water supply, and obviating the presence or need for a water chiller in communication with the potable water circuit.

FIG. 4 is a diagram showing a system 110 that includes both a cool potable water circuit 40 in a "closed" circuit configuration (shown as a "dashed" line) and a chilled air circuit 30 (shown as a solid line), with both the chilled air circuit 30 and the "closed" cool potable water circuit 40 in direct communication with a galley cart compartment 20. As shown in FIG. 4, a cool aircraft potable water supply 42 (referred to equivalently herein as " aircraft potable water supply 42) that can be, for example, an aircraft potable water tank (having a capacity of several hundred gallons (where 1 gallon corresponds to 3,79 liters) of potable water, or more) that contains cool potable water that can have an average temperature of cool potable water pumped into the tank while the aircraft is on the ground ranging from about 2°C to about 25°C (about 35°F to about 77°F). During flight, with the cool potable water supply 42 can be located in partially insulated areas of the aircraft that have more exposure to cold temperatures outside of the aircraft (as opposed to the conditioned environment in a passenger cabin, for example) to keep the potable water cool or cold in the potable water supply; and maintaining an average temperature of the cool potable water in the cool potable water supply ranging from about 2°C to about 7°C (about 35°F to about 45°F), for example.

While the present FIG.s illustrate systems that comprise "open" and/or "closed" potable water circuits, additional present aspects contemplate the ability to increase system versatility, efficiency, and energy conservation by comprising the architecture (control features, including valving, switching, signaling, processing, etc., necessary to convert or "switch" an illustrated system between open and closed configurations on the ground and/or in flight.

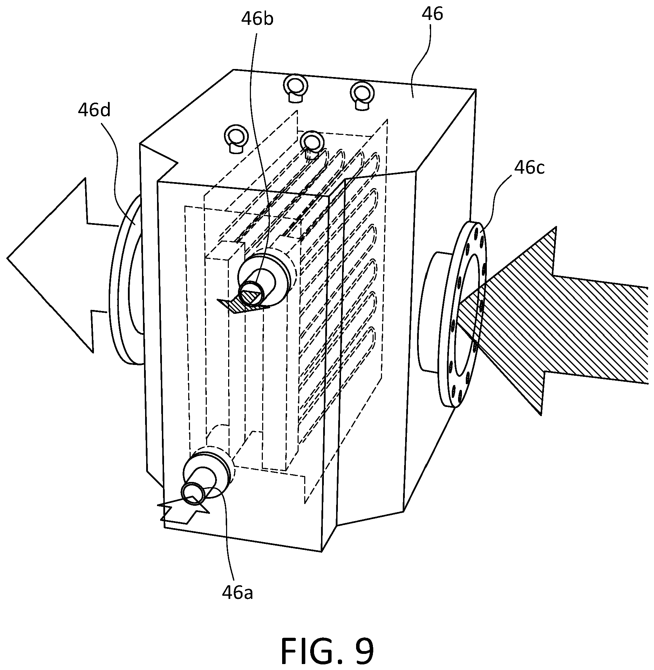

FIG. 4 further shows cool potable water directed from the cool aircraft potable water supply 42 via the potable water supply outlet 42b into potable water circuit line 43 of cool potable water circuit 40 with the cool potable water directed toward pump inlet 44a of pump 44. Pump 44 further includes valve 45 configured into an open position to allow passage of water into potable water line 43 only during an initial charging of the cool potable water circuit 40, after which valve 45 is "shut" or "closed" to block a flow of cool potable water from the potable water circuit 40 back into the cool aircraft potable water supply 42, and establishing a "closed" cool potable water circuit 40. Pump 44 directs cool potable water flow into potable water circuit 40 toward heat exchanger 46 positioned proximate to an air chiller 34 in a chilled air circuit 30. Cool potable water passing through heat exchanger (heat exchanger shown in more detail in FIG. 9, herein) encounters a temperature gradient that slightly warms the cool potable water and, in turn, lowers the temperature of an airflow passing through heat exchanger 46, with the potable water leaving the heat exchanger still considered to be "cool" and maintaining an average potable water flow temperature ranging from about 4°C to about 10°C (about 40°F to about 50°F) at that point in the cool potable water circuit 40.

The cool potable water is then directed to the galley cart compartment 20 via the cart compartment cool potable water inlet 22 to cool the galley cart compartment, with a "slightly warmer" cool potable water flow in the potable water circuit leaving the galley cart compartment (indicated in FIG. 4 system 110 as used "warmer water") via cart compartment cool potable water outlet 23 and circulating within the potable water circuit 40 back to pump inlet 44a of pump 44, and through pump outlet 44b and proceeding back into the cool potable water circuit 40. As the "slightly warmer" cool potable water leaves the galley cart compartment, the potable water will begin to chill as the cool potable water circuit that is located beneath the aircraft cabin (and that is exposed to lower ambient temperatures beneath the passenger cabin will begin to chill as the potable water flow proceeds to and from the pump to the heat exchanger, and through the potable water circuit 40 again.

FIG. 4 further shows the chilled air circuit 30 that also directly helps to cool the galley cart compartment according to present system 110, with airflow present in and adjacent to the heat exchanger 46 cooled by the cool potable water flowing to and through the heat exchanger 46, with the cooler air directed from the heat exchanger to air chiller 34 (via air chiller inlet 34a and air chiller outlet 34b) and into and out from the galley cart compartment 20 via galley cart compartment air inlet 24 and air outlet 25, respectively, with the used chilled air 38 directed back to the heat exchanger along air circuit 30.

In another present aspect, FIG. 5 is a system diagram showing a system 120 for cooling a galley cart compartment that includes a cool potable water circuit 40 and a chilled air circuit in direct communication with galley cart compartment 20. System 120 shares many of the features of system 110 as shown in FIG. 5, but with system 120 as shown in FIG. 5 comprising an "open" cool potable water circuit.

That is, as explained herein and according to present aspects, an "open" cool potable water circuit is established (and is shown in FIG. 5) when a continuous flow of cool potable water from a cool aircraft potable water supply is directed from the aircraft potable water supply, through a cool potable water circuit and then returns to the aircraft potable water supply for continuous circulation into the potable water circuit from the aircraft potable water supply, as opposed to the cool potable water in the circuit not being allowed to return to the aircraft potable water supply in the "closed" circuit configuration, as shown in FIG. 4, for example). In other words, in the "open" system the cool aircraft potable water supply is at all times within, and is a part of, the cool potable water circuit 40, with the aircraft potable water supply 42 having both a cool potable water supply inlet 42a and outlet 42b that are both positioned within the cool potable water circuit 40 in the open configuration.

As shown in FIG. 5, cool potable water contained within a cool potable water supply 42 is directed from the aircraft potable water supply 42 via cool potable water supply outlet 42b into cool potable water circuit line 43 of cool potable water circuit 40 toward water pump inlet 44a of water pump 44, and into pump 44. The cool potable water flow in circuit 40 leaves pump 44 via pump outlet 44b toward and into heat exchanger 46 where air in a chilled air circuit 30 is treated as described with respect to FIG. 4.

Similar to the system 110, system 120 in FIG. 5 shows chilled air in a chilled air circuit 30 further chilled by interaction of the air circuit with the cool potable water circuit 40 at the heat exchanger 46. The chilled air within the chilled air circuit 30 directly contacts the galley cart compartment 20, and the cool potable water circuit 40 also directly contacts the galley cart compartment 20. Similar to system 110, system 120 shows the used chilled air 38 leaving the galley cart compartment and directed back to the heat exchanger along air circuit 30.

FIG. 5 shows the warmer water in system 120 cycled within cool potable water circuit 40 and directed back into the cool aircraft potable water supply 42 (in the "open" circuit configuration) via the potable water supply inlet 42a and then further directed from the cool aircraft potable water supply 42 via the cool potable water supply outlet 42b to and through pump 44 and on to the heat exchanger 46. As the "slightly warmer" cool potable water leaves the galley cart compartment 20, the potable water will begin to chill as the cool potable water circuit that is located beneath the aircraft cabin (and that is exposed to lower ambient temperatures beneath the passenger cabin will begin to chill as the potable water flow proceeds to and from the pump to the heat exchanger, and through the potable water circuit 40 again.

According to further present aspects, further present systems include cooling a galley cart compartment with a cool potable water flow through a cool potable water circuit that is placed in direct contact with the galley cart compartment, with no adjacent or additional chilled air circuit present, and wherein the cool potable water in the cool potable water circuit directed to the cart compartment is exclusively responsible for the cooling of the cart compartment.

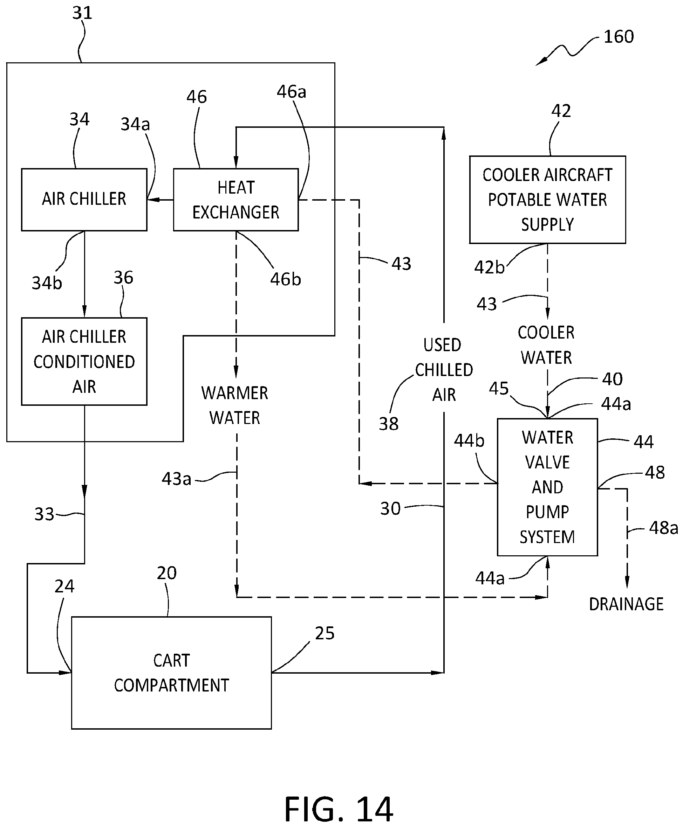

Also illustrative aspects not necessarily forming part of the claims include FIGs. 6 and 7 which outline systems 130, 140, respectively, that show a potable water circuit established to provide cart compartment cooling without the incorporation of a chilled air circuit impacting the cooling capability of potable water circuit 40. In other alternate present aspects, the potable water circuit can provide enhanced cooling to a cart compartment by establishing a chilled air circuit that does significantly impact the potable water circuit, with the chilled air circuit configured to incorporate a heat exchanger placed in closed proximity to an air chiller air return, and with the potable water flow in the potable water circuit directed to the heat exchanger, and with the heat exchanger and the air chiller contained within and housed within an integral air chiller unit. See FIGs. 14, 15, 16, 17, and 18.

According to further present illustrative aspects, FIG. 6 is a system diagram showing a system 130 for cooling a galley cart compartment that includes a cool potable water circuit 40 in direct communication with galley cart compartment 20. System 130, as shown in FIG. 6, does not include the presence of a chilled air circuit. That is, according to a present illustrative aspect, in system 130, as shown in FIG. 6, the cool potable water in the cool potable water circuit 40 that is directed to the cart compartment is exclusively responsible for the cooling of the cart compartment.

FIG. 6 shows "closed" system 130 including a cool potable water supply outlet 42b in communication with pump 44 for the purpose of delivering an initial "charge" of cool potable water to circuit 40 from aircraft potable water supply 42. After the initial "charge" of cool potable water is delivered from the cool aircraft potable water supply 42 to circuit 40, valve 45 of pump 44 is moved to a closed position to close off further entry of cool potable water to the potable water circuit 40 from the aircraft potable water supply 42, and creating the "closed" cool potable water circuit. According to system 130, cool potable water circuit valve line 43 of cool potable water circuit 40 is in communication with pump 44, and a water cooling component 47 (that can be, for example, a water chilling blanket-type device, etc.), with the cool potable water circuit 40 further in communication with the galley cart compartment 20 in a closed circulating system.

As shown in FIG. 6, cool potable water flow within circuit line 43 is directed from pump outlet 44b of pump 44 to water cooling component inlet 47a of water cooling component 47. The cool potable water flow leaves water cooling component 47 via water cooling component outlet 47b and is directed to a galley cart compartment inlet 22 of galley cart compartment 20. The cool potable water circuit 40 of system 130 completes a cycle within cool potable water circuit 40 with slightly warmer (cool) potable water (shown in FIG. 6 as "warmer water") leaving the galley cart compartment 20 via galley cart compartment cool potable water outlet 23. The potable water is directed back to the pump 44 and directed to proceed through the circuit repeatedly.

As shown in system 130, the potable water can be re-chilled during travel within the potable water circuit 40 at the water cooling component 47 with the water configured to maintain and/or re-establish the cool potable water in circuit 40 at a temperature ranging from about 2°C to about 10°C (about 35°F to about 50°F). The chilling of the cool potable water in circuit 40 by the water cooling/chilling component 47 is configured to ensure that the temperature delta of the cool potable water flow through potable water circuit 40 remains at a selected temperature range. In addition, as described herein, as the "slightly warmer" cool potable water leaves the galley cart compartment 20, the potable water will begin to chill as the cool potable water circuit that is located beneath the aircraft cabin (and that is exposed to lower ambient temperatures beneath the passenger cabin) will begin to chill as the potable water flow proceeds to and from the pump, and through the closed circuit 40 again in system 130.

Also for illustrative purposes, FIG. 7 is a system diagram showing a system 140 for cooling a galley cart compartment that includes a cool potable water circuit 40 in direct communication with galley cart compartment 20. As shown in FIG. 7 (and similar to system 130 shown in FIG. 6), system 140 does not include the presence of a chilled air circuit. That is, according to a present aspect, in system 140, as shown in FIG. 7, the cool potable water in the cool potable water circuit 40 that is directed to the cart compartment is exclusively responsible for the cooling of the cart compartment, (and is similar to system 130 shown in FIG. 6), with system 140 configured into an "open" cool potable water circuit. That is, system 140 is an "open" system, with the cool potable water supply positioned within and as a part of cool potable water circuit 40 and with the cool aircraft potable water supply 42 continuously providing a source of cool potable water flow into the circuit, and with the cool potable water proceeding through the potable water circuit 40, and then returning to the cool potable water supply 42.

In FIG. 7, system 140 includes many of the components of system 130 (shown in FIG. 6), with the components commonly enumerated. Because system 140 is an "open" circuit with respect to the cool potable water supply, system 140 differs from system 130 (a "closed" system) in terms of the valving of pump 44 and the cool aircraft potable water supply 42 comprising a cool potable water supply inlet 42a (absent from system 130 of FIG. 6) into potable water circuit 40 of system 140 for cooling a galley cart compartment that includes a cool potable water circuit 40 in direct communication with galley cart compartment 20.

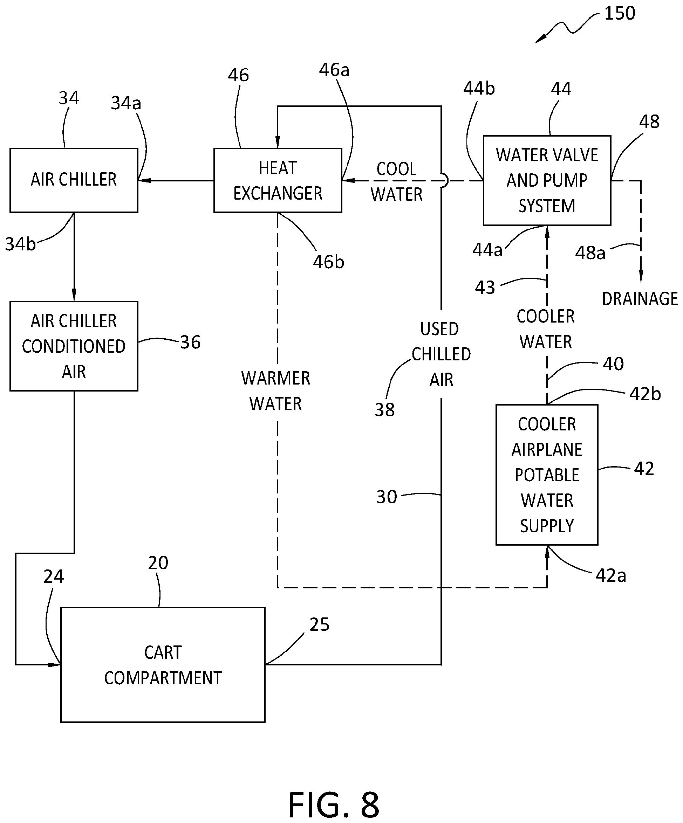

According to another illustrative aspect, FIG. 8 is a system diagram showing a system 150. Unlike systems 110 and 120, system 150 includes a galley cart compartment in direct contact with a chilled air circuit 30, and in indirect contact with a cool potable water circuit 40. That is, in systems 110 and 120 (shown in FIGs. 4 and 5, respectively) both the potable water circuit 40 and the chilled air circuit 30 are in direct contact with the cart to provide cooling to the galley cart compartment.

Illustrative system 150, as shown in FIG. 8, provides a flow of chilled air directly to the galley cart compartment, with the cool potable water circuit engaging the air circuit at the heat exchanger to augment the chilling of the air in the air circuit 30; but the cool potable water circuit does not directly contact the cart compartment. Instead, according to present aspects, in system 150, the cool potable water circuit indirectly cools the galley cart compartment by providing cooling to the airflow in air circuit 30, with the additionally chilled air in the air circuit then directly contacting the galley cart to cool the galley cart compartment.

As shown in FIG. 8, in system 150, the chilled air circuit is established and proceeds similarly to the air chilled circuit of systems 110, 120, with air directed to heat exchanger intake (referred to equivalently herein as "heat exchanger inlet") of heat exchanger 46 where the cycled air in the air circuit 30 is cooled in the heat exchanger by the cool potable water flow in the potable water circuit 40 that contacts the air circuit in the heat exchanger. The cool air with augmented chilling from the cool potable water circuit at the heat exchanger proceeds from the heat exchanger outlet to air chiller inlet 34a of air chiller 34, leaving air chiller outlet 34b as air chiller conditioned air 36.

According to present illustrative aspect, as a result of "pre-chilling" the airflow (e.g., by the cool potable water circuit contacting the airflow at the heat exchanger), the size, weight, power consumption, etc., (e.g., "footprint") of the air chiller incorporated into the air circuit 30 can be significantly smaller than air chillers previously used to chill air used to chill galley cart compartments. In addition, the significantly smaller air chillers called for and that can be used, according to present aspects, further can produce significantly less noise released into, for example, the enclosed environment that is an aircraft passenger cabin and aircraft galley area.

As further shown in FIG. 8, illustrative system 150 includes a cool potable water circuit in an "open" configuration, with the cool aircraft potable water supply 42 incorporated within the cool-potable water circuit 40 to provide a continuous and replenishing source of cool potable water to the potable water circuit 40, and with a continuous flow of "used" potable water returning within potable water circuit 40 to the cool aircraft potable water supply 42. As shown in FIG. 8, and according to present system 150, a flow of cool potable water is directed from the cool potable water supply 42 via cool potable water supply outlet 42b along/within cool potable water circuit line 43 to the pump inlet 44a of pump 44, and directed from pump 44 via pump outlet 44b to heat exchanger inlet 46a of heat exchanger 46.

At heat exchanger 46, the air is further chilled or cooled as a result of the cool potable water providing additional cooling to the airflow in the air circuit 30. According to this present aspect, the cooling of the air circuit that is augmented by the "cooling" supplied to the air in the air circuit is considered to provide the "indirect" cooling (by the cool potable water circuit) to the cart compartment directly contacted by the chilled air. As shown in FIG. 8, the system 150 provides air chilled by air chiller 34, with the air chilling augmented by the cooling provided by the cool potable water circuit 40 to the air circuit 30 in the heat exchanger 46.

In each of systems 110, 120, 130, 140, and 150, the potable water circuit can be drained via drainage port 48 that can be located at pump 44, with drainage port 48 in communication with drainage line 48a. During a water circuit drainage operation, selected valving and valve positioning can be implemented to block potable water from entering the water circuit from the potable water supply.

In addition, according to present aspects, in both of the "closed" and "open" systems described herein, the cool potable water circuit 40 can be initially charged with potable water when an aircraft, for example, is on the ground, concurrently with the filling of the cool potable water supply. This can prevent any depletion in aircraft potable water supply for the purpose of operating of the present galley cart cooling systems.

According to present aspects, the temperature of the potable water flow in the potable water circuit can be selected to maintain a temperature range over the circuit that, according to one example, can range from about 0°C to about 10°C (about 32°F to about 50°F). In another example, the temperature of the potable water flow in the potable water circuit can be selected to maintain a temperature range over the circuit that, according to one example, can range from about 2°C to about 7°C (about 35°F to about 45°F).

According to present aspects, the temperatures of the potable water in the potable water circuit can be altered to achieve a selected cool or cold temperature range by, for example, varying the degree of insulation used to insulate the potable water circuit and the aircraft potable water supply located below a passenger cabin and subjected to cold ambient temperatures during flight. In addition, selected temperatures of the potable water flow in the circuit can be selected and controlled by providing varied flow velocity provided to the water flow by the pump, and/or by providing, for example, agitation or aeration to the water flow (e.g., by provided surface features to an interior flow through pathway of a circuit line in the water circuit to induce, for example, a selected cavitation, etc.

According to present aspects, the temperature range of the potable water circuit can be primarily selected to provide the cooling to a galley cart compartment to preserve galley cart contents (e.g., food for human consumption) at a storage temperature for a flight duration that is considered to be safe and that will retard the growth of harmful pathogens and/or bacterial growth that can grow exponentially when temperatures are allowed to rise above 7°C (or 45°F) for an extended period, for example.

FIG. 9, is a representative partially exposed view of a heat exchanger 46 of the type that can be incorporated into the circuits and systems described herein, and according to present aspects, with the understanding that pathway and inlet and outlet locations can vary to accommodate selected positioning of circuit lines for selected systems, etc. As shown in FIG. 9, according to present aspects, the cool potable water flow from the cool potable water circuit 40 is introduced at heat exchanger inlet 46a into enters and passes through the heat exchanger 46 and exits the heat exchanger from the heat exchanger outlet 46b at a slightly "warmer" and/or less "cooled" potable water flow/circuit temperature; as the cool potable water flow, within the heat exchanger, encounters an airflow in the heat exchanger at a "warmer" temperature (a temperature that is "warmer" than the cool potable water flow temperature) such that the "warmer" airflow releases heat (and is "cooled" by the potable water flow) with the airflow "cooled", and with the airflow exiting the heat exchanger at a lower, "cooler" temperature. As shown in FIG. 9, the airflow entry into the heat exchanger is represented by the large, shaded arrow entering heat exchanger air inlet 46c, and the "cooler" airflow exit from the heat exchanger at the heat exchanger air outlet 46d represented by the large, unshaded arrow.

If further chilling of the cool potable water is desired, for example, within "closed" systems that can sustain a greater water temperature variation over time, a water chiller that can be, for example, a water-chilled blanket-type device can be integrated into a cool potable water circuit of the systems presented herein to, for example, re-chill the water in the potable water in the circuit with such water chiller positioned, for example, downstream of the heat exchanger, and/or, for example downstream of the cart compartment, etc.

With respect to chilled air circuit 30 shown in FIGs. 4, 5, and 8, and as described herein, the air circuit may not be enclosed in an enclosed physical apparatus or "line", but instead, the air "circuit" represents a directional airflow created in open space that can be directed by fans, etc., and with the arrows shown in the air circuit 30 indicating the directional flow of the air along the "circuit" 30. In other aspects, an airflow can be directed into a physical air line 33.

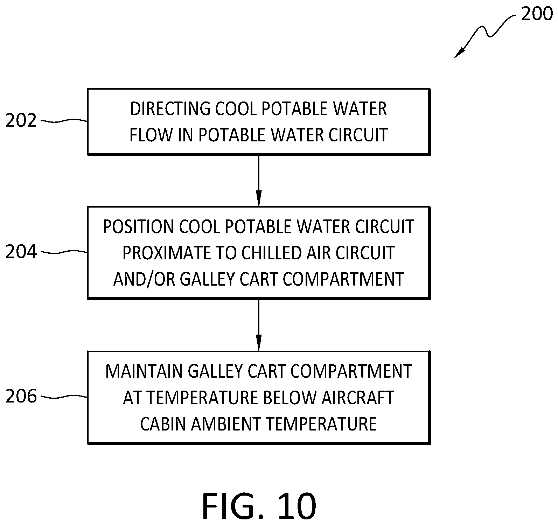

FIGs. 10, 11, 12, and 13 are flowcharts outlining methods according to present aspects. FIG. 10 is a flowchart outlining a method 200 for cooling an aircraft galley cart compartment, with the method 200 including directing 202 a potable water flow of potable water in an aircraft from an aircraft potable water supply within a potable water circuit, with the potable water flow including a potable water temperature that is below an aircraft cabin ambient temperature. The method 200 further includes positioning 204 the potable water circuit in communication with at least one of a chilled air circuit and an aircraft galley cart compartment to cool an aircraft galley cart compartment at least one of directly or indirectly, and maintaining 206 an aircraft galley cart compartment temperature at a temperature ranging from about 0°C to about 7°C (about 32°F to about 45°F).

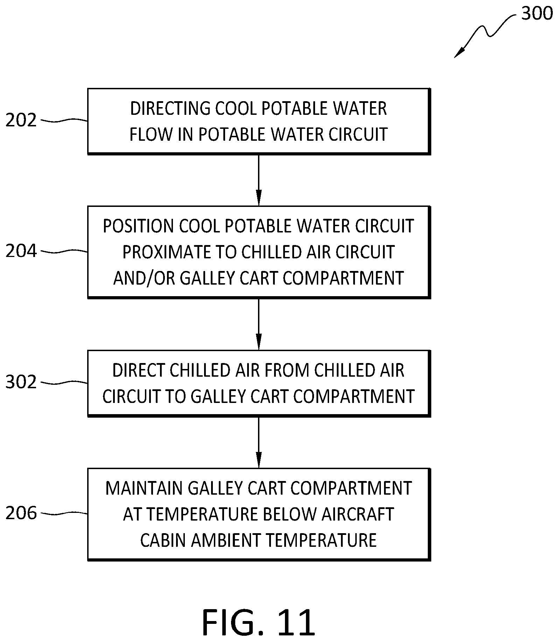

According to a further present aspect, FIG. 11 is a flowchart outlining a method 300 for cooling an aircraft galley cart compartment, with the method 300 including directing 202 a potable water flow of potable water in an aircraft from an aircraft potable water supply within a potable water circuit, with the potable water flow including a potable water temperature that is below an aircraft cabin ambient temperature. The method 300 further includes positioning 204 the potable water circuit in communication with at least one of a chilled air circuit and an aircraft galley cart compartment, and directing 302 chilled air from a chilled air circuit directly to a galley cart compartment to cool an aircraft galley cart compartment, and maintaining 206 an aircraft galley cart compartment temperature at a temperature ranging from about 0°C to about 7°C (about 32°F to about 45°F).

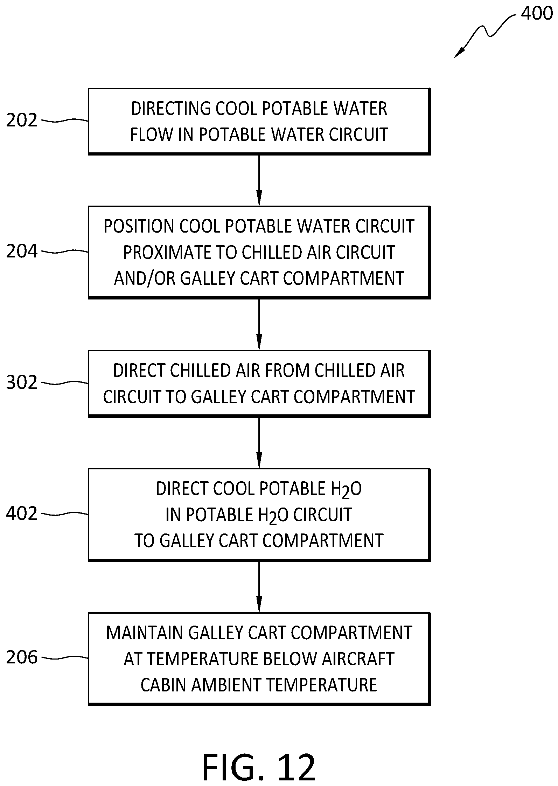

According to a further present aspect, FIG. 12 is a flowchart outlining a method 400 for cooling an aircraft galley cart compartment, with the method 400 including directing 202 a potable water flow of potable water in an aircraft from an aircraft potable water supply within a potable water circuit, with the potable water flow including a potable water temperature that is below an aircraft cabin ambient temperature. The method 400 further includes positioning 204 the potable water circuit in communication with at least one of a chilled air circuit and an aircraft galley cart compartment. Method 400 further includes directing 302 chilled air from a chilled air circuit directly to a galley cart compartment to cool an aircraft galley cart compartment, directing 402 a cool potable water flow within a cool potable water circuit to an aircraft galley cart compartment, and maintaining 206 an aircraft galley cart compartment temperature at a temperature ranging from about 0°C to about 7°C (about 32°F to about 45°F).

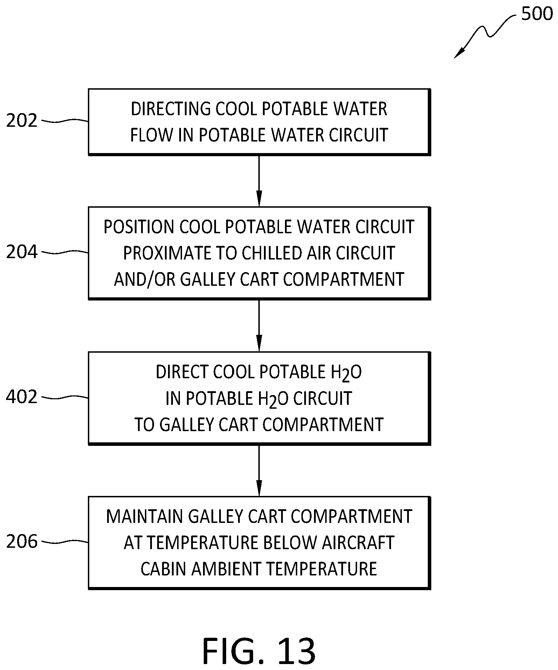

According to a further present aspect, FIG. 13 is a flowchart outlining a method 500 for cooling an aircraft galley cart compartment, with the method 500 including directing 202 a potable water flow of potable water in an aircraft from an aircraft potable water supply within a potable water circuit, with the potable water flow including a potable water temperature that is below an aircraft cabin ambient temperature. The method 500 further includes positioning 204 the potable water circuit in communication with at least one of a chilled air circuit and an aircraft galley cart compartment. Method 500 further includes directing 402 a cool potable water flow within a cool potable water circuit to an aircraft galley cart compartment, and maintaining 206 an aircraft galley cart compartment temperature at a temperature ranging from about 0°C to about 7°C (about 32°F to about 45°F).

The methods 200, 300, 400, and 500 as shown in FIGs. 10, 11, 12, and 13 (respectively) can incorporate one or more of the systems 100, 110, 120, 130, 140, and 150 shown in FIGs. 3, 4, 5, 6, 7, and/or 8 (respectively).

According to further present aspects, apparatuses, systems, and methods are disclosed to provide direct air cooling to a galley cart compartment and increase system cooling efficiency by providing an improved efficiency air chiller unit that comprises an air chiller and a heat exchanger both positioned within an enclosed unit or structure, with the air chiller and heat exchanger having a common housing surrounding both the air chiller and the heat exchanger, and with both the air chiller and the closely positioned heat exchanger being integrated components within the air chiller unit. The heat exchanger is positioned within the air chiller unit in close proximity to the air chiller air return to provide a chilled air "boost" of lowered-temperature air flow to the air entering the air chiller. The positioning of the heat exchanger in close proximity to the air chiller within the housing of the air chiller unit significantly increases the air chilling efficiency of the air chiller, while commensurately reducing the energy draw of the air chiller to achieve a selected chilling of an air flow released from the air chiller. The significantly reduced energy draw of the present air chiller positioned adjacent to and in close proximity to the heat exchanger in the air chiller unit significantly conserves the amount of power directed from, for example, an onboard power supply of a vehicle, including, for example, an aircraft.

According to present aspects, the positioning of the heat exchanger housed within an air chiller unit, and positioned in "close proximity" to the air return of the air chiller means that the heat exchanger can be placed at close distance from the air return of the air chiller that can be a close distance between the heat exchanger and the air return of the air chiller ranging from about 25,4 to 76,2 mm (1 to about 3 inches). In another presently contemplated definition for "close proximity" positioning of the heat exchanger relative to the air return of the air chiller, according to present aspects the close proximity positioning of the heat exchanger to the air return of the air chiller is configured to be a relative position (between the heat exchanger and the air return of the air chiller) where the cooling of the potable water flow in the potable water circuit at the heat exchanger/air chiller air return is configured to realize a significant temperature drop of about 3°C (i.e. about 5°F), while not increasing a power draw increase to obtain the temperature drop (e.g., the increase in chilling capacity/temperature drop is achieved without increasing any increased energy draw from a power source configured to power a present system).

In another present definitional characterization of the term "close proximity" used to define the relative positioning of the heat exchanger to the air return of the air chiller (where the heat exchanger and the air chiller are housed within an air chiller unit), the potable water flow, as a result of the close proximity positioning of the heat exchanger to the air return of the air chiller, realizes a cooling capacity increase ranging from about 8% to about 12% - e.g., a chilling capacity "boost" in the potable water circuit that is not otherwise realized when the heat exchanger is not positioned in close proximity to the air return of the air chiller, while not increasing a power draw increase to obtain the temperature drop (e.g., the increase in chilling capacity/temperature drop is achieved without increasing any increased energy draw from a power source configured to power a present system).

In yet another present definitional characterization of the term "close proximity" used to define the relative positioning of the heat exchanger to the air return of the air chiller (where the heat exchanger and the air chiller are housed within an air chiller unit), the potable water flow, as a result of the close proximity positioning of the heat exchanger to the air return of the air chiller, realizes a cooling capacity increase of about 150 W (500 BTU/HR), while not increasing a power draw increase to obtain the temperature drop (e.g., the increase in chilling capacity/temperature drop is achieved without increasing any increased energy draw from a power source configured to power a present system).

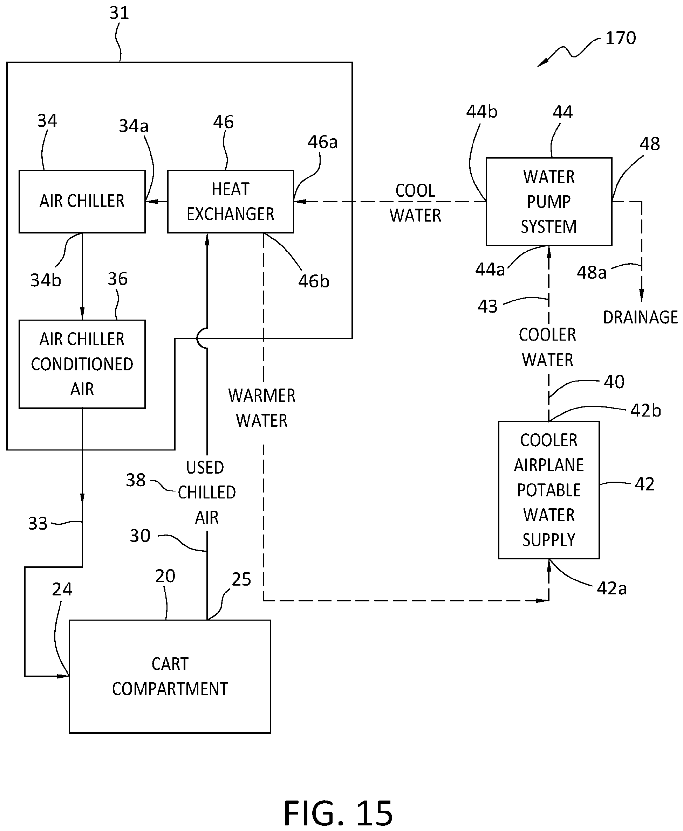

FIGs. 14 and 15 are system box drawings of present systems 160, 170 that further refine and otherwise augment the chilling efficiency of at least the system 150 shown in FIG. 8 , for example, where: 1) the chilled air circuit is cooled from the chilled water circuit; and 2) the chilled air circuit is further chilled by the air chiller; and 3) according to the systems 160, 170 shown in FIGs. 14 and 15, a modified air chiller unit is provided that integrally comprises an integrated heat exchanger positioned proximate to the integrated air chiller air return to provide a selected additional boost of cooled air to the air chiller within the air chiller unit. The "super" chilled air is then delivered to the chilled air circuit to directly contact a galley cart compartment to be chilled and to be maintained at a temperature ranging from about 0°C to about 7°C (about 32°F to about 45°F).

According to illustrative aspects, system 160 shown in FIG. 14 incorporates a "closed" potable water circuit, as described herein, and where only an initial "charge" or bolus of ambient temperature potable water is delivered from a cooler potable water supply into the cool water circuit, with the potable water supply then "closed" from supplying further water flow to the cool water circuit, and with the water in the water circuit circulated within the water circuit and without returning into the cooler potable water supply during "closed" system operation shown in system 160.

According to another illustrative aspect, system 170 shown in FIG. 15 incorporates an "open" potable water circuit, as described herein, and where cooler potable water is delivered from a cooler potable water supply into the cool potable water circuit, and with a warmed water flow having "cooling" depleted from the cool water circuit (e.g., as the cool water circuit contacts the chilled air circuit and is slightly "warmed") is then returned into the cooler potable water supply that remains "open" to the potable water circuit (e.g., with the water in the water circuit continuously circulating through the water supply as a part of the "open" water circuit in the "open" system operation shown in 170.

As shown in illustrative FIG. 14, system 160 represents a "closed" system that can be a "closed" version of the "open" system 150 shown in illustrative FIG. 8, and with FIG. 14 showing the significant system modification (as compared to system 150) of significantly enhanced chilling efficiency for system 170 realized at the air chiller (as compared to system 150, for example) through the incorporation of a heat exchanger placed into close proximity of the air chiller return, and with the closely positioned heat exchanger and the air chiller housed together within a unitary or singular enclosed air chiller unit, and with system 170, as shown in FIG. 14 being a "closed" system (as opposed to the "open" system 150 shown in FIG. 8).

That is, as shown in illustrative FIG. 14, system 160 includes a cool potable water circuit in a "closed" configuration, with the cool aircraft potable water supply 42 incorporated within the cool-potable water circuit 40 to provide an initial charge or "bolus" of cool potable water flow into and to substantially fill the potable water circuit. System 160 is then configured (Ivia valve signaling and valve positioning, for example) to restrict further water from water supply 42 into potable water circuit 40. As shown in system 160, the initial water charge is then recirculated (e.g., via pumping, applied vacuum, etc.) within potable water circuit 40, with the potable water flow in the potable water circuit bypassing the potable water supply 42 (e.g., with system 160 configured to restrict reentry of a potable water flow from potable water circuit into the potable water supply 42.

As shown in FIG. 14, and according to present illustrative system 160, an initial charge of cool potable water is directed from the cool potable water supply 42 via cool potable water supply outlet 42b along/within cool potable water circuit line 43 to heat exchanger inlet 46a of heat exchanger 46. At heat exchanger 46, the air in chilled air circuit 30 is further chilled or cooled as a result of the cool potable water providing additional cooling to the airflow in the air circuit 30. According to this present aspect, the cooling of the air circuit that is augmented by the "cooling" supplied to the air in the air circuit (by the cool potable water in potable water circuit 40) is considered as providing indirect water cooling to the cart compartment, as the potable water circuit cools the chilled air circuit directly, but does not itself directly come into contact with the galley cart compartment. The chilled air circuit is chilled by: 1) the air chiller; 2) the cooling provided to the chilled air circuit by the potable water circuit; and 3) the additional "boosted" chilling of the chilled air with the chilling significantly augmented by the heat exchanger in the air chiller unit positioned in close proximity to the air chiller return within the air chiller structural "unit". The air in the chilled air circuit is then directed as "super chilled" air in the chilled air circuit to directly contact and directly cool the galley cart compartment, and to maintain the galley cart compartment at a selected chilled temperature ranging from about 0°C to about 7°C (about 32°F to about 45°F). Again, as shown in FIG. 14, the "closed" system 160 provides air chilled by air chiller 34, with the air chilling augmented by the cooling provided by the cool potable water circuit 40 to the air circuit 30 in the heat exchanger 46, and with the air chilling efficiency of the air chiller further significantly augmented by directing chilled air from the closely positioned heat exchanger into the air chiller air return within the enclosed air chiller unit.

In the "closed" system shown in system 160, the initial charge or "bolus" of cool water from the water supply 42 is dispensed from the potable water supply outlet 42a, into the potable water circuit 40 and into the pump inlet 44a of pump 44, and pout of pump outlet 44b into cool water circuit line 43 to fill water circuit 40. After exiting the heat exchanger, the now slightly warmer water flow will re-enter pump 44 that recirculates the water flow into the cool water circuit line 43, with valve 45 present within pump 44 moved from a valve first open position to allow a water from the water supply 42 to fill the potable water circuit 40 into a valve second closed position after the potable water circuit is filled (e.g., "charged"), and with the valve 45 preventing any further water flow into the potable water circuit from the water supply 42, and with valve 45 further preventing any water flow from the water circuit 40 to reenter the water supply 42. That is, the valve position of valve 45 is controlled to direct circulation of the potable water continuously through the potable water circuit 40 in a "closed" circuit via the pump and valve operation, and with no further water allowed into the water circuit from the water supply, or from the water supply into the water circuit after the initial charging of the potable water circuit.

As shown in illustrative FIG. 15, "open" system 170 represents a system that is similar to "open" system 150 shown in illustrative FIG. 8. However, system 170 further includes the significant modification of enhanced chilling efficiency for system 170 (as compared to system 150) realized at the air chiller through the incorporation of a heat exchanger placed within an enclosed air chiller unit into close proximity of the air chiller return, and with the closely positioned heat exchanger and the air chiller housed together within a unitary or singular air chiller unit, and with system 170, as shown in FIG. 15 being an "open" system.

That is, as shown in FIG. 15, system 170 includes a cool potable water circuit in an "open" configuration, with the cool aircraft potable water supply 42 incorporated to establish, maintain, and otherwise within the cool-potable water circuit 40 to establish, maintain, and otherwise provide a continuous and replenishing source of cool potable water to the potable water circuit 40, and with a continuous flow of "used" potable water returning into and/or reentering the potable water supply 42 that is configured to be a continuous component of the potable water circuit 40. As shown in FIG. 15, and according to present system 170, a flow of cool potable water is directed from the cool potable water supply 42 via cool potable water supply outlet 42b along/within cool potable water circuit line 43 to the pump inlet 44a of pump 44, and directed from pump 44 via pump outlet 44b into the cool potable water circuit line 43 to heat exchanger inlet 46a of heat exchanger 46.

At heat exchanger 46, the air in the chilled air circuit 30 is further cooled and/or chilled (the air realizes a temperature reduction) as a result of the cool potable water providing additional cooling to the airflow in the air circuit 30. According to this present aspect, the cooling of the air circuit that is augmented by the "cooling" supplied to the air in the air circuit (by the cool potable water circuit) is considered to indirectly "cool" the galley cart compartment, with the chilled air chilled by: 1) the air chiller; 2) the indirect cooling of the potable water cool water circuit; and 3) the additional "boosted" chilling of the chilled air with the chilling of the air in the chilled air circuit significantly augmented by the heat exchanger in the air chiller unit positioned in close proximity to the air chiller return. The chilled air in the chilled air circuit 30 is then directed as "super chilled" air in the chilled air circuit to directly contact and directly cool the galley cart compartment to maintain the galley cart compartment at a chilled temperature ranging from about 0°C to about 7°C (about 32°F to about 45°F).

Again, as shown in FIG. 15, the system 170 provides air chilled by air chiller 34, with the air chilling augmented by the cooling provided by the cool potable water circuit 40 to the air circuit 30 in the heat exchanger 46, with the air chilling efficiency of the air chiller further significantly augmented by directing chilled air from the closely positioned heat exchanger into the air chiller air return within the enclosed air chiller unit 31.

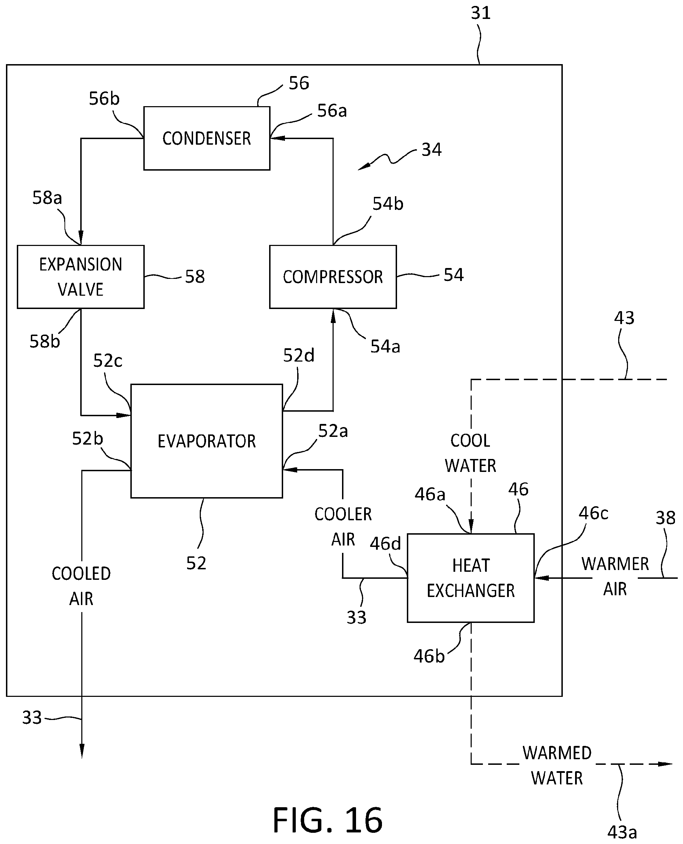

FIG. 16 is a box diagram showing components of an exemplary air chiller unit 31 that can be of the type shown in FIGs. 14 and 15 in systems 160, 170, respectively. As shown in FIG 16, an exemplary air chiller 34 located within air chiller unit 31 comprises an evaporator 52 positioned at the "evaporator side" of the air chiller 34, with evaporator 52 further comprising an evaporator inlet side 52a that is located in close proximity to heat exchanger 46 within air chiller unit 31. Heat exchanger 46 is in communication with cool water circuit line 43 of the potable water circuit 40 with the cool water circuit line 43 shown in FIG. 16 directed into air chiller unit 31 to engage with and otherwise direct a cool water flow into heat exchanger potable water circuit inlet 46a. Used chilled air 38 (that is the slightly warmer or "warmed" air, for example, exiting a galley cart compartment in the air chilled circuit 30 shown in FIGs. 14, 15) is shown in FIG. 16 directed into the air chiller unit 31 and entering heat exchanger air circuit inlet 46c.

In the heat exchanger, the warmer air contacts the cool water circulating through and entering the heat exchanger at the heat exchanger potable water circuit inlet 46a, with the resultant air that is cooled by the cool water flow in the heat exchanger then exiting the heat exchanger at heat exchanger air circuit outlet 46d. The cool water in the heat exchanger that is slightly warmed by the warmer air the heat exchanger then exits the heat exchanger from the heat exchanger potable water circuit outlet 46b (for example, as a slightly "warmer" or slightly "warmed water flow" 43a). The air cooled in the heat exchanger exits the heat exchanger air circuit outlet 46d and proceeds into evaporator 52 via evaporator inlet side 42a. The air flow then exits evaporator outlet 52b and is directed to a compressor inlet 54a of compressor 54 where the air flow is compressed and leaves compressor 54 via compressor outlet 54b en route to condenser 56. The compressed air enters condenser 56 at condenser inlet 56a, the air is condensed, and the condensed air is released from condenser outlet 56b where the air engages an expansion valve 58 where the expanded air reengages evaporator 52 at evaporator inlet 52c, the chilling cycle is repeated. The chilled air exits evaporator 52 of air chiller 34 within air chiller unit 31 via chilled air line 33 of the chilled air circuit 30. The chilled air circuit 30 then delivers the chilled air from the air chiller unit 31 to the galley cart compartment that is to be maintained at a temperature ranging from about 0°C to about 7°C (about 32°F to about 45°F).

Similar to the systems 110, 120, 130, 140, and 150 disclosed herein, the potable water circuit shown in systems 160, 170 can be drained via drainage port 48 that can be located at pump 44, with drainage port 48 in communication with drainage line 48a. During a water circuit drainage operation, selected valving and valve positioning can be implemented to block potable water from entering the water circuit from the potable water supply.

In addition, according to present aspects, in both of the "closed" and "open" systems described herein, the cool potable water circuit 40 can be initially charged with potable water when an aircraft, for example, is on the ground, concurrently with the filling of the cool potable water supply. This can prevent any depletion in aircraft potable water supply for the purpose of operating of the present galley cart cooling systems.

According to present aspects, the temperature of the potable water flow in the potable water circuit can be selected to maintain a temperature range over the circuit that, according to one example, can range from about 0°C to about 10°C (about 32°F to about 50°F). In another example, the temperature of the potable water flow in the potable water circuit can be selected to maintain a temperature range over the circuit that, according to one example, can range from about 2°C to about 7°C (about 35°F to about 45°F).

According to present aspects, the temperatures of the potable water in the potable water circuit can be altered to achieve a selected cool or cold temperature range by, for example, varying the degree of insulation used to insulate the potable water circuit and the aircraft potable water supply located below a passenger cabin and subjected to cold ambient temperatures during flight. In addition, selected temperatures of the potable water flow in the circuit can be selected and controlled by providing varied flow velocity provided to the water flow by the pump, and/or by providing, for example, agitation or aeration to the water flow (e.g., by provided surface features to an interior flow through pathway of a circuit line in the water circuit to induce, for example, a selected cavitation, etc.

According to present aspects, the temperature range of the potable water circuit can be primarily selected to provide the cooling to a galley cart compartment to preserve galley cart contents (e.g., food for human consumption) at a storage temperature for a flight duration that is considered to be safe and that will retard the growth of harmful pathogens and/or bacterial growth that can grow exponentially when temperatures are allowed to rise above 7°C (or 45°F) for an extended period, for example.

According to the present illustrative aspects and systems 150, 160, 170 shown in FIGs. 8, 14, and 15, respectively, the potable water circuit is primarily responsible for indirectly cooling a galley cart compartment; as, in systems 150, 160, and 170 only the chilled air circuit is configured to directly engage, come into direct contact with, and otherwise communicate directly with the galley cart compartment for the purpose of chilling and maintaining a chilled galley cart compartment at a selected "cool" and/or "chilled" temperature that is below about 7°C (or 45°F).

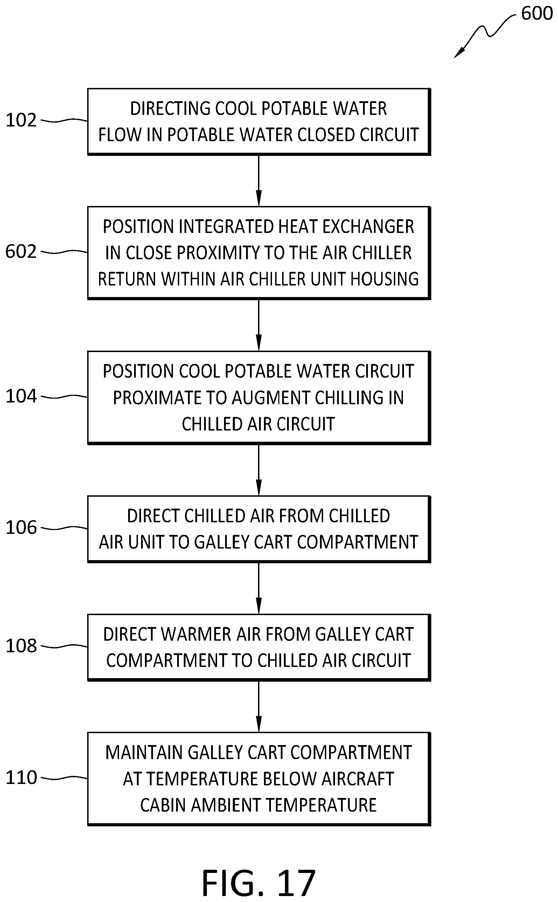

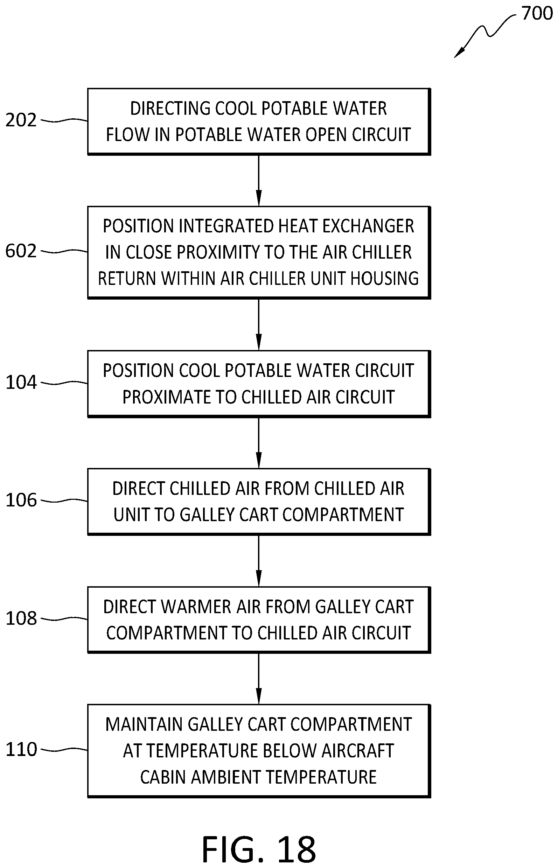

FIG. 17 and 18 are a flowcharts outlining methods 600, 700 according to present illustrative aspects. As shown in FIG. 17, method 600 is directed to a method 600 for cooling an aircraft galley cart compartment, with the method including directing 102 a potable water flow of potable water from an aircraft potable water supply within a potable water circuit in an aircraft, said potable water circuit comprising the potable water flow of potable water at a potable water temperature that is below an aircraft cabin ambient temperature, and positioning 104 the potable water circuit in communication with a chilled air circuit, with the chilled air circuit in communication with an aircraft galley compartment, and with the chilled air circuit configured to cool an aircraft galley cart compartment at least one of directly and indirectly.

The method 600 further includes the chilled air circuit including an air chiller unit, with the air chiller unit including an air chiller air return and an integrated heat exchanger incorporated within the air chiller unit, and with the method further including positioning 602 the integrated heat exchanger within the air chiller unit housing of the air chiller unit, with the heat exchanger positioned in close proximity to the air chiller air return within the air chiller unit housing, and with integrated heat exchanger in communication with the potable water circuit. Method 600 further includes directing 604 chilled air from the chilled air unit within the chille3d air circuit to the aircraft cart galley compartment, directing 108 warmer air from the aircraft galley cart compartment to the chilled air circuit, and maintaining 110 the aircraft galley cart compartment temperature at a temperature ranging from about 0°C to about 7°C (about 32°F to about 45°F).

In another present aspect, in method 600 the potable water circuit consists of a closed potable water circuit.

In a further present illustrative aspect, as shown in FIG. 18, in method 700 the potable water circuit consists of an open potable water circuit, with the open potable water circuit configured to remain in open communication with the aircraft potable water supply, and with the aircraft potable water supply configured to provide a continuous "fresh" supply of potable water flow to the potable water circuit during operation of system 170, and with the potable water flow reentering into the potable water supply during the operation of system 170.

In a further present illustrative aspect, according to methods 600, 700 the potable water flow of potable water in the potable water circuit maintains an average temperature ranging from about 2°C to about 25°C (about 35°F to about 77°F).

The methods 600, 700 as shown in FIGs. 17, 18 can incorporate one or more of the systems 160, 170 shown in FIGs. 14, 15, 16.

The systems, apparatuses, and methods described herein can further incorporate system controllers, sensors, detectors, thermostats, processors, alarms, shutoffs, additional valving, etc., and that can further include attendant processors, hardware and software, etc. to monitor, control, regulate, and/or alter one of more features of the cool potable water circuit and chilled air circuit either manually, automatically, remotely, etc. The addition of controllers, sensors, thermostats, actuators, alarms, "fail safes", etc., to the present systems can be in communication with readouts and/or can be in communication with automated electrical circuits to, for example, monitor and adjust temperatures of the air flow and temperatures of the potable water flow at one or more points along and throughout the air circuit and cool potable water circuit, including the temperature of the potable water supply, such that the air circuit and potable water circuit can be monitored in real time. For example, if a temperature deviation from expected values arises and is detected, the configured and incorporated monitoring devices, and supporting software/hardware/processors can be configured to initiate actions on the water and air circuits to alter airflow and/or potable water flow velocities; change potable water circuit configurations from closed to open systems functioning, etc., for the purpose of, for example, returning a selected temperature range value to optimal operating temperatures, etc. Peripheral sensors, detectors, etc., can further include routine system "checks" on the components of the circuits (e.g., pump performance, system pressure, heat exchange performance, chiller performance, etc.) that can occur at scheduled maintenance intervals as well as occurring at throughout a flight, as a circuit cooling system is initiated, and further including a continuous cooling system monitoring in real time that can include leakage detection as well as temperature variation, etc.

The present aspects may, of course, be carried out in other ways than those specifically set forth herein without departing from the scope of the appended claims. The present aspects are to be considered in all respects as illustrative and not restrictive, and all changes coming within the meaning of the appended claims are intended to be embraced therein.

## Claims

1. A system (110, 120) for cooling an aircraft galley cart compartment (20), the system comprising:
a cool potable water circuit (40), said cool potable water circuit configured to initiate from an aircraft potable water supply (42);
an aircraft galley cart compartment (20) configured to be cooled by a potable water flow circulated through the potable water circuit by direct cooling;
a chilled air circuit (30) in communication with the aircraft galley cart compartment (20), said chilled air circuit (30) comprising:
an air chiller unit (31), said air chiller unit comprising:
an air chiller air return (34a);
an integrated heat exchanger (46), said integrated heat exchanger positioned within the air chiller unit (31) in close proximity to the air chiller air return (34a), said integrated heat exchanger (46) in communication with the potable water circuit (40).

2. The system of Claim 1, wherein, in operation, the potable water circuit (40) is a closed potable water circuit, said potable water closed circuit further comprising a valve (44), said valve positioned between the aircraft potable water supply (42) and the potable water circuit (40), and wherein said valve (44) is configured to move from an open position to a closed position to maintain a closed initial potable water charge within the closed potable water circuit (40).

3. The system of Claim 1, wherein, in operation, the potable water circuit (40) is an open potable water circuit in communication with a continuous potable water flow directed from the aircraft potable water supply (42) into the potable water circuit (40), said continuous potable water flow further directed from the potable water circuit (40) back into the aircraft potable water supply (42).

4. The system of any of Claims 1-3, wherein the potable water circuit (40) is in communication with the chilled air circuit (30), said potable water circuit (40) configured to augment cooling air in the chilled air circuit (30), said chilled air circuit in direct contact with the aircraft galley cart compartment (20).

5. The system of any of Claims 1-4, wherein the water of the potable water in the potable water circuit (40) is cooled environmentally, the potable water circuit being exposed to cold ambient temperatures outside of the aircraft during flight.

6. The system of Claim 5 further comprising:
a water chiller in the potable water circuit to continually cool the potable water.

7. The system of Claim 6, wherein the water chiller is a water chilling blanket-type device.

8. The system of any of Claims 1-7, wherein the potable water circuit (40) comprises a pump (44) and a drainage line (48a) and wherein the potable water circuit (40) can be drained via a drainage port (48) located at pump (44)and in communication with drainage line (48a).

9. The system of any of Claims 1-8, wherein the air chiller unit (31) further comprises an evaporator (52), a compressor (54), a condenser (56) and an expansion valve (58) so that the air cooled in the heat exchanger exits a heat exchanger air circuit outlet (46d) and proceeds into evaporator (52) via an evaporator inlet side (52a), wherein the air flow then exits an evaporator outlet (52b) and is directed to a compressor inlet (54a) of compressor 54 where the air flow is compressed and leaves compressor (54) via a compressor outlet (54b) en route to condenser (56), wherein the compressed air enters condenser (56) at a condenser inlet (56a), wherein the air is condensed, and the condensed air is released from a condenser outlet (56b) where the air engages the expansion valve (58) where the expanded air reengages evaporator (52) at an evaporator inlet (52c).

10. An aircraft comprising a system of any of Claim 1-9.

11. A method (600; 700) for cooling an aircraft galley cart compartment (20), the method comprising:
directing (102; 202) a potable water flow of potable water from an aircraft potable water supply within a potable water circuit in an aircraft, said potable water circuit comprising the potable water flow of potable water at a potable water temperature that is below an aircraft cabin ambient temperature;
positioning (104) the potable water circuit in communication with a chilled air circuit, said chilled air circuit in communication with the aircraft galley cart compartment, said potable water circuit configured to cool the aircraft galley cart compartment directly, said chilled air circuit comprising:
an air chiller unit, said air chiller unit comprising:
an air chiller air return;
an integrated heat exchanger;
positioning said integrated heat exchanger within the air chiller unit in close proximity to the air chiller air return, said integrated heat exchanger in communication with the potable water circuit;
directing (106) chilled air from the chilled air circuit to the aircraft galley cart compartment;
directing (108) warmer air from the aircraft galley cart compartment to the chilled air circuit; and
maintaining (110) the aircraft galley cart compartment temperature at a temperature ranging from about 0°C to about 7°C.

12. The method (700) of Claim 11, wherein the potable water circuit consists of an open potable water circuit, said open potable water circuit configured to remain in open communication with the aircraft potable water supply, said aircraft potable water supply comprising a potable water supply inlet in communication with the open potable water circuit.

13. The method of Claim 11 or claim 12, wherein said positioning of the integrated heat exchanger in close proximity to the air chiller is configured to augment cooling of the chilled air circuit.

14. The method of any of Claims 11-13, wherein the potable water flow of potable water in the potable water circuit maintains an average temperature ranging from about 2°C to about 25°C.

15. The method of any of Claims 11-14, wherein the water of the potable water in the potable water circuit (40) is cooled environmentally by adjusting amounts and types of insulation present at the aircraft potable water supply and throughout the potable water circuit that is exposed to cold ambient temperatures outside of the aircraft during flight.

## Patentansprüche

1. System zum Kühlen eines Flugzeugküchenwagenfachs (20), das System umfassend:
einen Trinkwasserkühlkreislauf (40), wobei der Trinkwasserkühlkreislauf dazu eingerichtet ist, von einer Flugzeug-Trinkwasserversorgung (42) zu beginnen;
ein Flugzeugküchenwagenfach (20), welches dazu eingerichtet ist, durch einen Trinkwasserfluss, welcher durch den Trinkwasserkreislauf zirkuliert wird, durch eine Direktkühlung gekühlt zu werden;
einen Kaltluftkreislauf (30), welcher mit dem Flugzeugküchenwagenfach (20) in Verbindung steht, wobei der Kaltluftkreislauf (30) umfasst:
eine Luftkühleinheit (31), wobei die Luftkühleinheit umfasst:
eine Luftkühlerluftrückführung (34a);
einen integrierten Wärmetauscher (46), wobei der integrierte Wärmetauscher innerhalb der Luftkühleinheit (31) in unmittelbarer Nähe zu der Luftkühlerluftrückführung (34a) positioniert ist, wobei der integrierte Wärmetauscher (46) mit dem Trinkwasserkreislauf (40) in Verbindung steht.

2. System nach Anspruch 1, wobei, in Betrieb, der Trinkwasserkreislauf (40) ein geschlossener Trinkwasserkreislauf ist, wobei der geschlossene Trinkwasserkreislauf ferner ein Ventil (44) aufweist, wobei das Ventil zwischen der Flugzeug-Trinkwasserversorgung (42) und dem Trinkwasserkreislauf (40) positioniert ist, und wobei das Ventil (44) dazu eingerichtet ist, sich von einer offenen Stellung in eine geschlossene Stellung zu bewegen, um eine geschlossene anfängliche Trinkwasserfüllung innerhalb des geschlossenen Trinkwasserkreislaufs (40) aufrechtzuerhalten.

3. System nach Anspruch 1, wobei, in Betrieb, der Trinkwasserkreislauf (40) ein offener Trinkwasserkreislauf ist, welcher mit einem kontinuierlichen Trinkwasserfluss in Verbindung steht, welcher von der Flugzeug-Trinkwasserversorgung (42) in den Trinkwasserkreislauf (40) geleitet wird, wobei der kontinuierliche Trinkwasserfluss ferner von dem Trinkwasserkreislauf (40) zurück in die Flugzeug-Trinkwasserversorgung (42) geleitet wird.

4. System nach einem der Ansprüche 1 bis 3, wobei der Trinkwasserkreislauf (40) mit dem Kaltluftkreislauf (30) in Verbindung steht, wobei der Trinkwasserkreislauf (40) dazu eingerichtet ist, kühlende Luft in dem Kaltluftkreislauf (30) zu verstärken, wobei der Kaltluftkreislauf in direktem Kontakt mit dem Flugzeugküchenwagenfach (20) steht.

5. System nach einem der Ansprüche 1 bis 4, wobei das Trinkwasser in dem Trinkwasserkreislauf (40) umgebungsbedingt gekühlt wird, wobei der Trinkwasserkreislauf kalten Umgebungstemperaturen außerhalb des Flugzeugs während des Fluges ausgesetzt ist.

6. System nach Anspruch 5, ferner umfassend:
einen Wasserkühler in dem Trinkwasserkreislauf, um das Trinkwasser kontinuierlich zu kühlen.

7. System nach Anspruch 6, wobei der Wasserkühler eine Wasserkühldeckentyp-Vorrichtung ist.

8. System nach einem der Ansprüche 1 bis 7, wobei der Trinkwasserkreislauf (40) eine Pumpe (44) und eine Ablaufleitung (48a) umfasst, und wobei der Trinkwasserkreislauf (40) über einen Ablassanschluss (48), welcher an der Pumpe (44) angeordnet ist und mit der Ablaufleitung (48a) in Verbindung steht, entleert werden kann.

9. System nach einem der Ansprüche 1 bis 8, wobei die Luftkühleinheit (31) ferner einen Verdampfer (52), einen Kompressor (54), einen Kondensator (56) und ein Expansionsventil (58) umfasst, sodass die Luft, welche in dem Wärmetauscher gekühlt wird, einen Luftkreislaufauslass des Wärmetauschers (46d) verlässt und via einer Verdampfereinlassseite (52a) in den Verdampfer (52) gelangt, wobei
der Luftstrom dann einen Verdampferauslass (52b) verlässt und zu einem Kompressoreinlass (54a) des Kompressors (54) geleitet wird, wo der Luftstrom komprimiert wird und den Kompressor (54) via eines Kompressorauslasses (54b) auf dem Weg zu dem Kondensator (56) verlässt, wobei die komprimierte Luft in den Kondensator (56) an einem Kondensatoreinlass (56a) eintritt, wobei die Luft kondensiert wird, und die kondensierte Luft aus einem Kondensatorauslass (56b) freigesetzt wird, wo die Luft das Expansionsventil (58) betätigt, wo die expandierte Luft in den Verdampfer (52) an einem Verdampfereinlass (52c) erneut eintritt.

10. Flugzeug, welches ein System nach einem der Ansprüche 1 bis 9 umfasst.

11. Verfahren (600; 700) zum Kühlen eines Flugzeugküchenwagenfachs (20), das Verfahren umfassend:
Leiten (102; 202) eines Trinkwasserflusses von Trinkwasser aus einer Flugzeug-Trinkwasserversorgung innerhalb eines Trinkwasserkreislaufs in einem Flugzeug, wobei der Trinkwasserkreislauf den Trinkwasserfluss von Trinkwasser bei einer Trinkwassertemperatur umfasst, welche unterhalb einer Umgebungstemperatur der Flugzeugkabine liegt;
Positionieren (104) des Trinkwasserkreislaufs in Verbindung mit einem Kaltluftkreislauf, wobei der Kaltluftkreislauf mit dem Flugzeugküchenwagenfach in Verbindung steht, wobei der Trinkwasserkreislauf dazu eingerichtet ist, das Flugzeugküchenwagenfach direkt zu kühlen, wobei der Kaltluftkreislauf umfasst:
eine Luftkühleinheit, wobei die Luftkühleinheit umfasst:
eine Luftkühlerluftrückführung;
einen integrierten Wärmetauscher;
Positionieren des integrierten Wärmetauschers innerhalb der Luftkühleinheit in unmittelbarer Nähe zu der Luftkühlerluftrückführung, wobei der integrierte Wärmetauscher mit dem Trinkwasserkreislauf in Verbindung steht;
Leiten (106) von Kaltluft aus dem Kaltluftkreislauf in das Flugzeugküchenwagenfach;
Leiten (108) von wärmerer Luft aus dem Flugzeugküchenwagenfach in den Kaltluftkreislauf; und
Aufrechterhalten (110) der Temperatur des Flugzeugküchenwagenfachs bei einer Temperatur, welche von etwa 0 °C bis etwa 7 °C reicht.

12. Verfahren (700) nach Anspruch 11, wobei der Trinkwasserkreislauf aus einem offenen Trinkwasserkreislauf besteht, wobei der offene Trinkwasserkreislauf dazu eingerichtet ist, in offener Verbindung mit der Flugzeug-Trinkwasserversorgung zu bleiben, wobei die Flugzeug-Trinkwasserversorgung einen Trinkwasserversorgungseinlass umfasst, welcher mit dem offenen Trinkwasserkreislauf in Verbindung steht.

13. Verfahren nach Anspruch 11 oder Anspruch 12, wobei das Positionieren des integrierten Wärmetauschers in unmittelbarer Nähe zu der Luftkühlers dazu eingerichtet ist, eine Kühlung des Kaltluftkreislaufs zu verstärken.

14. Verfahren nach einem der Ansprüche 11 bis 13, wobei der Trinkwasserfluss von Trinkwasser in dem Trinkwasserkreislauf eine Durchschnittstemperatur, welche von etwa 2 °C bis etwa 25 °C reicht, aufrechterhält.

15. Verfahren nach einem der Ansprüche 11 bis 14, wobei das Wasser des Trinkwassers in dem Trinkwasserkreislauf (40) umgebungsbedingt gekühlt wird, indem Mengen und Arten einer Isolierung, welche an der Flugzeug-Trinkwasserversorgung und entlang des Trinkwasserkreislaufs vorhanden sind, welcher während des Fluges kalten Umgebungstemperaturen außerhalb des Flugzeugs ausgesetzt ist, angepasst werden.

## Revendications

1. Système (110, 120) de refroidissement d'un compartiment de chariot de cuisine (20) d'aéronef, le système comprenant :
un circuit d'eau potable (40) froide, ledit circuit d'eau potable froide étant configuré pour partir d'une alimentation en eau potable (42) d'aéronef ;
un compartiment de chariot de cuisine (20) d'aéronef configuré pour être refroidi par un flux d'eau potable circulant à travers le circuit d'eau potable par refroidissement direct ;
un circuit d'air refroidi (30) en communication avec le compartiment de chariot de cuisine (20) d'aéronef, ledit circuit d'air refroidi (30) comprenant :
- une unité de refroidisseur d'air (31), ladite unité de refroidisseur d'air comprenant :
∘ un retour d'air (34a) de refroidisseur d'air ;
∘ un échangeur de chaleur intégré (46), ledit échangeur de chaleur intégré étant positionné au sein de l'unité de refroidisseur d'air (31) à proximité immédiate du retour d'air (34a) de refroidisseur d'air, ledit échangeur de chaleur intégré (46) étant en communication avec le circuit d'eau potable (40).

2. Système selon la revendication 1, dans lequel, en fonctionnement, le circuit d'eau potable (40) est un circuit d'eau potable fermé, ledit circuit d'eau potable fermé comprenant en outre une vanne (44), ladite vanne étant positionnée entre l'alimentation en eau potable (42) d'aéronef et le circuit d'eau potable (40), et dans lequel ladite vanne (44) est configurée pour passer d'une position ouverte à une position fermée pour maintenir une charge d'eau potable initiale fermée au sein du circuit d'eau potable (40) fermé.

3. Système selon la revendication 1, dans lequel, en fonctionnement, le circuit d'eau potable (40) est un circuit d'eau potable ouvert en communication avec un flux d'eau potable continu dirigé de l'alimentation en eau potable (42) d'aéronef vers le circuit d'eau potable (40), ledit flux d'eau potable continu étant en outre dirigé du circuit d'eau potable (40) de retour vers l'alimentation en eau potable (42) d'aéronef.

4. Système selon l'une quelconque des revendications 1 à 3, dans lequel le circuit d'eau potable (40) est en communication avec le circuit d'air refroidi (30), ledit circuit d'eau potable (40) étant configuré pour augmenter l'air de refroidissement dans le circuit d'air refroidi (30), ledit circuit d'air refroidi étant en contact direct avec le compartiment de chariot de cuisine (20) d'aéronef.

5. Système selon l'une quelconque des revendications 1 à 4, dans lequel l'eau de l'eau potable dans le circuit d'eau potable (40) est refroidie par l'environnement, le circuit d'eau potable étant exposé à des températures ambiantes froides à l'extérieur de l'aéronef pendant le vol.

6. Système selon la revendication 5 comprenant en outre :
un refroidisseur d'eau dans le circuit d'eau potable pour refroidir en continu l'eau potable.

7. Système selon la revendication 6, dans lequel le refroidisseur d'eau est un dispositif de type couverture de refroidissement d'eau.

8. Système selon l'une quelconque des revendications 1 à 7, dans lequel le circuit d'eau potable (40) comprend une pompe (44) et une conduite de vidange (48a) et dans lequel le circuit d'eau potable (40) peut être vidangé via un orifice de vidange (48) situé au niveau de la pompe (44) et en communication avec la conduite de vidange (48a).

9. Système selon l'une quelconque des revendications 1 à 8, dans lequel l'unité de refroidisseur d'air (31) comprend en outre un évaporateur (52), un compresseur (54), un condenseur (56) et un détendeur (58) de sorte que l'air refroidi dans l'échangeur de chaleur sorte d'une sortie de circuit d'air d'échangeur de chaleur (46d) et pénètre dans l'évaporateur (52) via un côté d'entrée (52a) d'évaporateur, dans lequel le flux d'air sort alors d'une sortie d'évaporateur (52b) et est dirigé vers une entrée (54a) de compresseur du compresseur (54) où le flux d'air est comprimé et quitte le compresseur (54) via une sortie (54b) de compresseur en route vers le condenseur (56), dans lequel l'air comprimé entre dans le condenseur (56) au niveau d'une entrée (56a) de condenseur, dans lequel l'air est condensé, et l'air condensé est libéré d'une sortie de condenseur (56b) où l'air met en prise le détendeur (58), où l'air détendu remet en prise l'évaporateur (52) au niveau d'une entrée d'évaporateur (52c).

10. Aéronef comprenant un système selon l'une quelconque des revendications 1 à 9.

11. Procédé (600 ; 700) de refroidissement d'un compartiment de chariot de cuisine (20) d'aéronef, le procédé comprenant :
un acheminement (102 ; 202) d'un flux d'eau potable à partir d'une alimentation en eau potable d'aéronef au sein d'un circuit d'eau potable dans un aéronef, ledit circuit d'eau potable comprenant le flux d'eau potable à une température d'eau potable inférieure à une température ambiante de cabine d'aéronef ;
un positionnement (104) du circuit d'eau potable en communication avec un circuit d'air refroidi, ledit circuit d'air refroidi étant en communication avec le compartiment de chariot de cuisine d'aéronef, ledit circuit d'eau potable étant configuré pour refroidir le compartiment de chariot de cuisine d'aéronef directement, ledit circuit d'air refroidi comprenant :
une unité de refroidisseur d'air, ladite unité de refroidisseur d'air comprenant :
- un retour d'air du refroidisseur d'air ;
- un échangeur de chaleur intégré ;
un positionnement dudit échangeur de chaleur intégré au sein de l'unité de refroidisseur d'air à proximité immédiate du retour d'air du refroidisseur d'air, ledit échangeur de chaleur intégré étant en communication avec le circuit d'eau potable ;
un acheminement (106) d'air refroidi du circuit d'air refroidi vers le compartiment de chariot de cuisine d'aéronef ;
un acheminement (108) d'air plus chaud du compartiment de chariot de cuisine d'aéronef vers le circuit d'air refroidi ; et
un maintien (110) de la température du compartiment de chariot de cuisine d'aéronef à une température allant d'environ 0 °C à environ 7 °C.

12. Procédé (700) selon la revendication 11, dans lequel le circuit d'eau potable consiste en un circuit d'eau potable ouvert, ledit circuit d'eau potable ouvert étant configuré pour rester en communication ouverte avec l'alimentation en eau potable d'aéronef, ladite alimentation en eau potable d'aéronef comprenant une entrée d'alimentation en eau potable en communication avec le circuit d'eau potable ouvert.

13. Procédé selon la revendication 11 ou la revendication 12, dans lequel ledit positionnement de l'échangeur de chaleur intégré à proximité immédiate du refroidisseur d'air est configuré pour augmenter le refroidissement du circuit d'air refroidi.

14. Procédé selon l'une quelconque des revendications 11 à 13, dans lequel le flux d'eau potable d'eau potable dans le circuit d'eau potable maintient une température moyenne allant d'environ 2 °C à environ 25 °C.

15. Procédé selon l'une quelconque des revendications 11 à 14, dans lequel l'eau de l'eau potable dans le circuit d'eau potable (40) est refroidie par l'environnement en ajustant les quantités et les types d'isolation présents au niveau de l'alimentation en eau potable de l'aéronef et dans l'ensemble du circuit d'eau potable qui est exposé à des températures ambiantes froides à l'extérieur de l'aéronef pendant le vol.
